# EUROPEAN PATENT APPLICATION

(11) **EP 4 804 727 A1**
(43) Date of publication of application: **09.09.2026**
(21) Application number: 24885425.9
(22) Date of filing: 15.10.2024
(51) Int. Cl.: H05B 45/10, G02F 1/133, G09G 3/20, G09G 3/34, G09G 3/36, H05B 45/325, H05B 47/16

(54) **DISPLAY DEVICE, METHOD FOR OPERATING DISPLAY DEVICE, AND BACKLIGHT**

(30) Priority: 30.10.2023 JP 2023185295
(71) Applicant: Sony Group Corporation, Tokyo 108-0075 (JP)
(72) Inventor: AKIYAMA Hideki, Tokyo 108-0075 (JP); FUKUDA Shogo, Tokyo 108-0075 (JP)
(74) Representative: 2SPL Patentanwälte PartG mbB
(86) International application number: PCT/JP2024/036605
(87) International publication number: WO 2025/094650

(57) **Abstract**

The present disclosure concerns a display apparatus, a method of operating a display apparatus, and a backlight by which it is possible to reduce the cost and size of an LED driver. A light emission synchronization signal supplied to a plurality of light-emitting diode (LED) drivers and a data signal such as a duty ratio and a light emission delay time used to control light emission of LEDs mounted in the LED drivers are time-division multiplexed, and wiring lines are integrated to form a single-layer wiring line by connecting the plurality of LED drivers in a daisy chain. Thus, two terminals relating to dedicated transmission and reception of the light emission synchronization signal are omitted, so that the manufacturing cost of the LED drivers and the size of the device are reduced. The present disclosure can be applied to a display apparatus using an LED backlight.

## Description

### Technical Field

The present disclosure relates to a display apparatus, a method of operating a display apparatus, and a backlight. In particular, the present disclosure relates to a display apparatus, a method of operating a display apparatus, and a backlight, by which it is possible to reduce the cost and size of an LED driver.

### Background Art

A liquid crystal display panel in which a plurality of light-emitting diode (LED) backlight panels are used to control light emission is generally widespread.

A technique has been proposed by which light emission timings of the plurality of LED backlight panels are synchronized to maintain stable brightness (see PTL 1).

### Citation List

### Patent Literature

PTL 1: JP 2009-300612 A

### Summary

### Technical Problem

However, in the technique according to PTL 1, wiring lines for light emission synchronization signals used for controlling the light emission timings of the plurality of LED backlight panels are individually provided in the LED driver.

Therefore, it is necessary to provide a terminal for the light emission synchronization signal in the LED driver that is provided in the LED backlight panel, and this is a rate-limiting factor relating to the device cost and the device size of the LED driver.

The present disclosure has been made in view of the above-described circumstances, and in particular, an aim of the present disclosure is to omit a terminal for a light emission synchronization signal by transmitting the light emission synchronization signal superimposed on another signal, and thus, to achieve a reduction in the cost and the size of the LED driver.

### Solution to Problem

A display apparatus and a backlight according to one aspect of the present disclosure include a light emission synchronization signal output unit configured to output a light emission synchronization signal that is supplied to a plurality of light-emitting diode (LED) drivers configured to control light emission of LEDs and is used to synchronize light emission of the plurality of LED drivers, a light emission control signal output unit configured to output a light emission control signal used by each of the plurality of LED drivers to control light emission of the LEDs, and a superimposing unit configured to superimpose the light emission synchronization signal and the light emission control signal.

A method of operating a display apparatus according to one aspect of the present disclosure includes outputting a light emission synchronization signal that is supplied to a plurality of light-emitting diode (LED) drivers configured to control light emission of LEDs and is used to synchronize light emission of the plurality of LED drivers, outputting a light emission control signal used by the LED drivers to control light emission of the LEDs, and superimposing the light emission synchronization signal and the light emission control signal.

In one aspect of the present disclosure, a light emission synchronization signal is output that is supplied to a plurality of light-emitting diode (LED) drivers configured to control light emission of LEDs and is used to synchronize light emission of the plurality of LED drivers, a light emission control signal is output that is used by the LED drivers to control light emission of the LEDs, and the light emission synchronization signal and the light emission control signal are superimposed.

### Brief Description of Drawings

[Fig. 1]

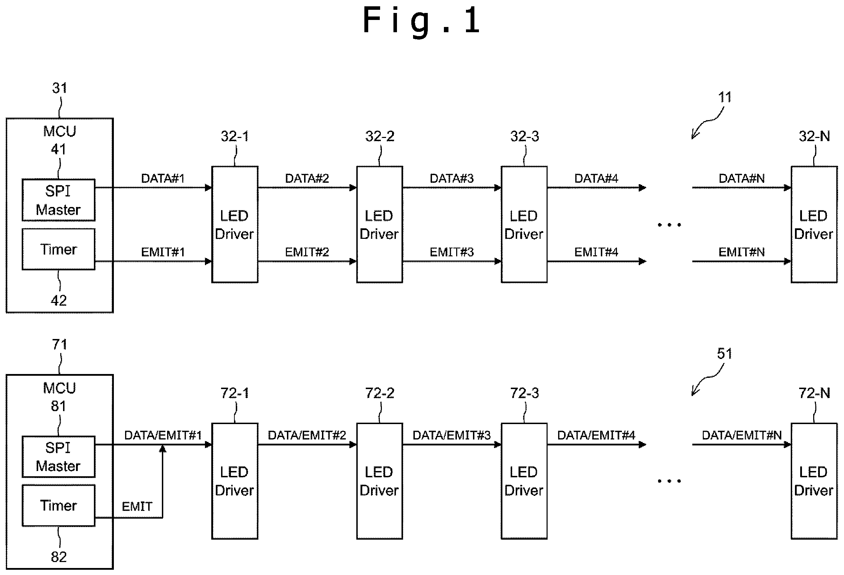

   Fig. 1 is a diagram illustrating an overview of the present disclosure.
[Fig. 2]

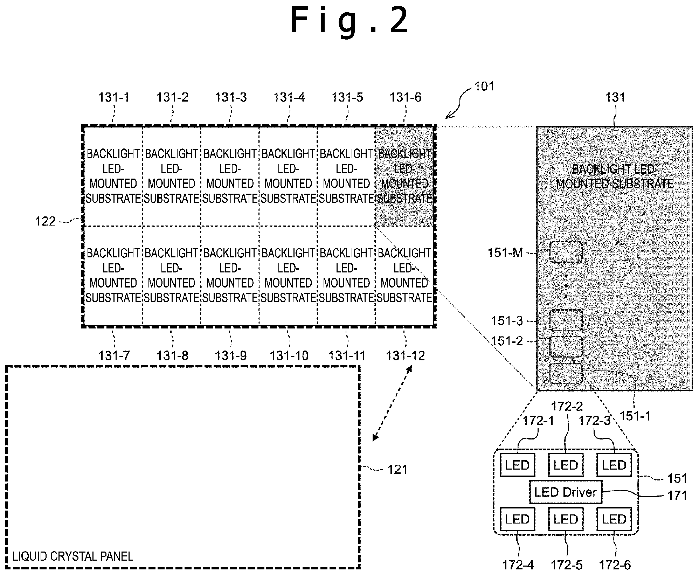

   Fig. 2 is a diagram illustrating a configuration example of a display apparatus according to the present disclosure.
[Fig. 3]

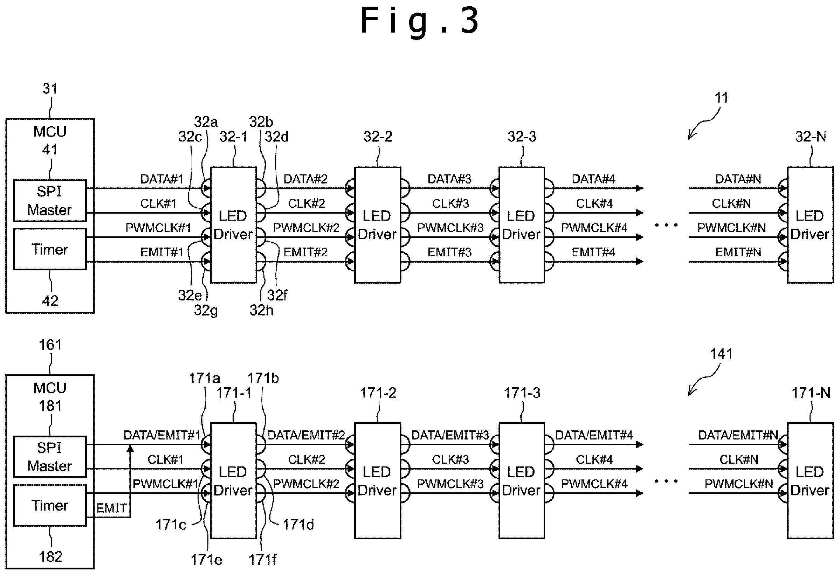

   Fig. 3 is a diagram illustrating a configuration example of a first embodiment of a control system in a backlight LED-mounted substrate.
[Fig. 4]

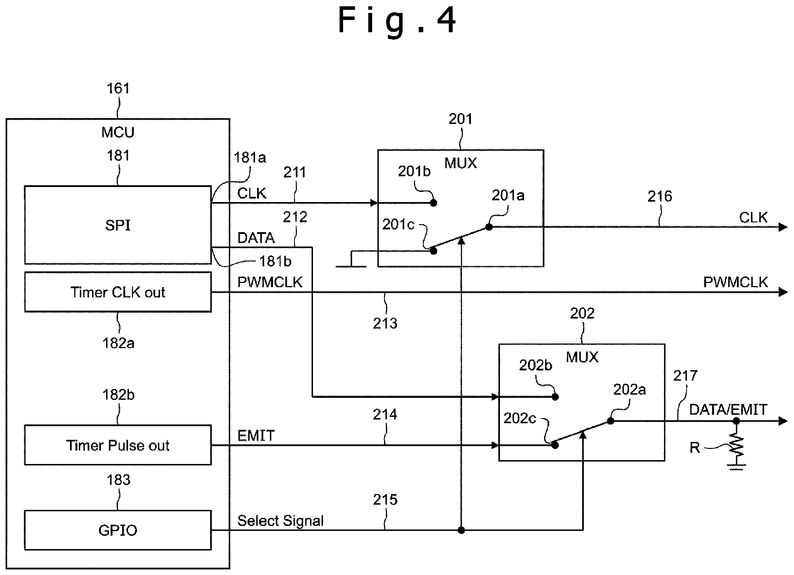

   Fig. 4 is a diagram illustrating a configuration example of a first embodiment of a multiplexer used for superimposing a light emission synchronization signal on a data signal.
[Fig. 5]

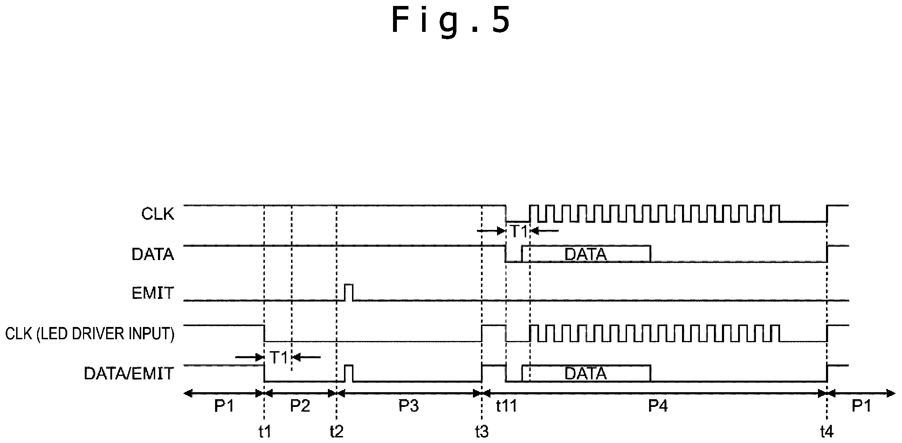

   Fig. 5 is a waveform diagram illustrating a switching operation of a switch in the multiplexer of Fig. 4.
[Fig. 6]

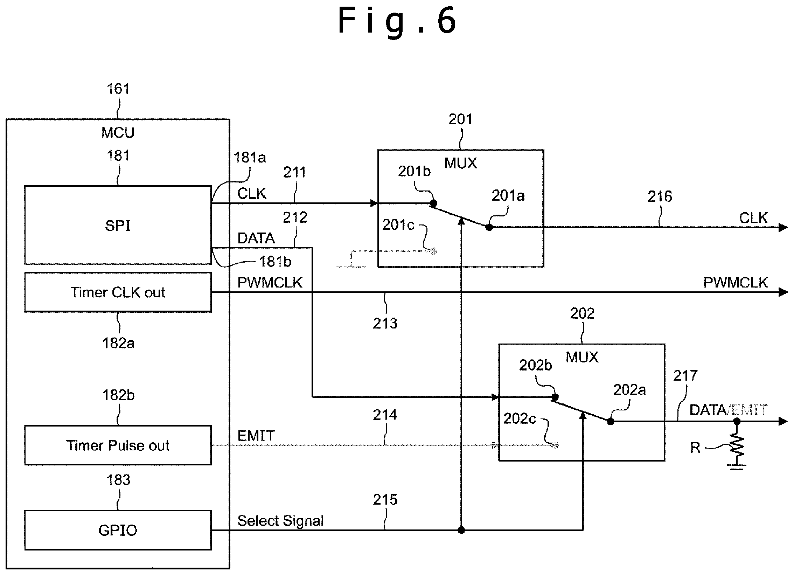

   Fig. 6 is a diagram illustrating a switching operation of a switch in the multiplexer of Fig. 4.
[Fig. 7]

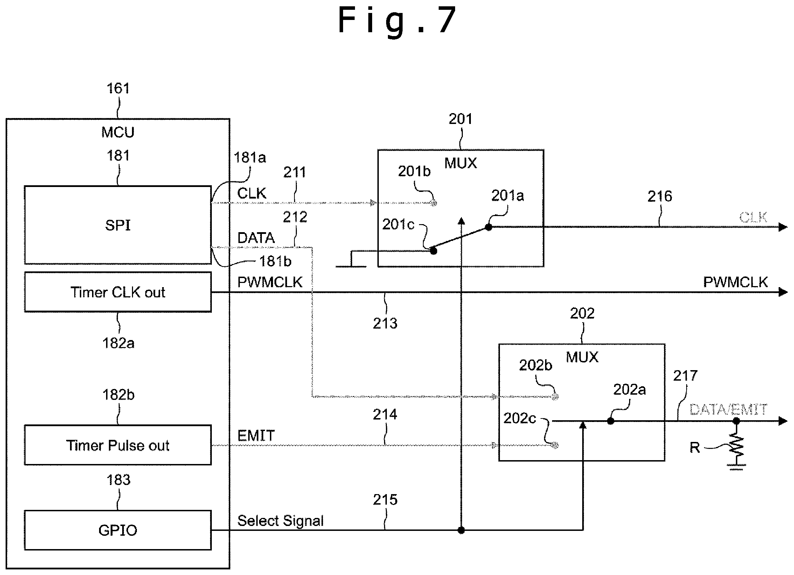

   Fig. 7 is a diagram illustrating a switching operation of the switch in the multiplexer of Fig. 4.
[Fig. 8]

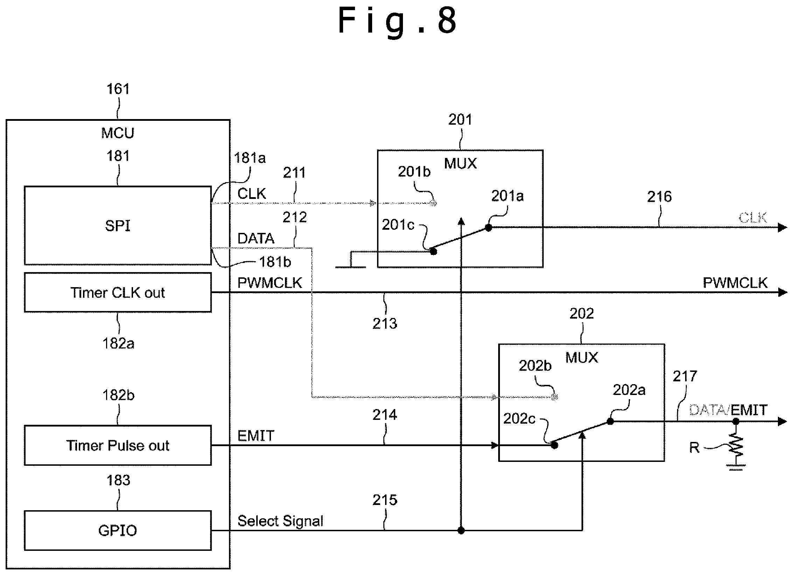

   Fig. 8 is a diagram illustrating a switching operation of the switch in the multiplexer of Fig. 4.
[Fig. 9]

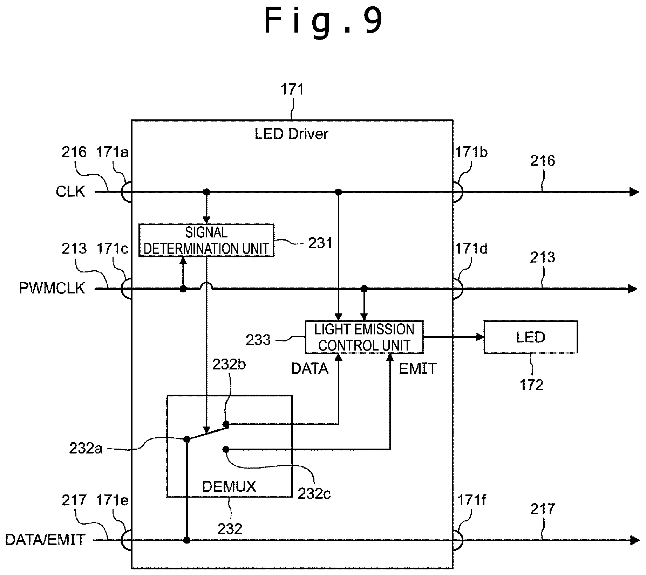

   Fig. 9 is a diagram illustrating a configuration example of a first embodiment of an LED driver corresponding to the multiplexer in Fig. 5.
[Fig. 10]

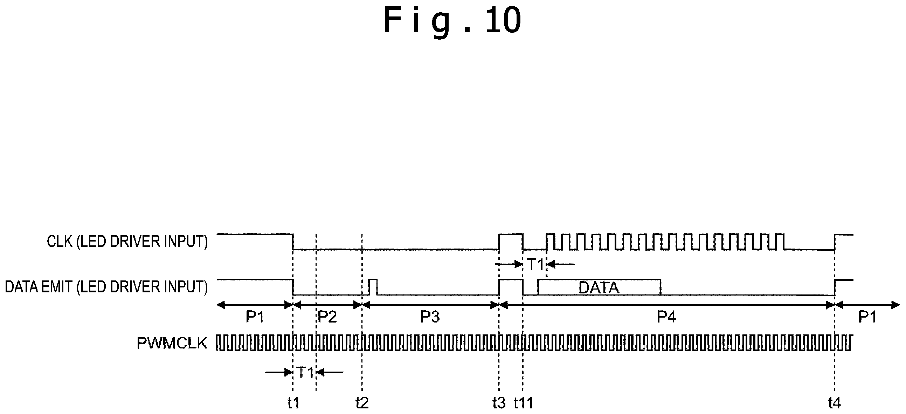

   Fig. 10 is a waveform diagram illustrating an operation of the LED driver in Fig. 9.
[Fig. 11]

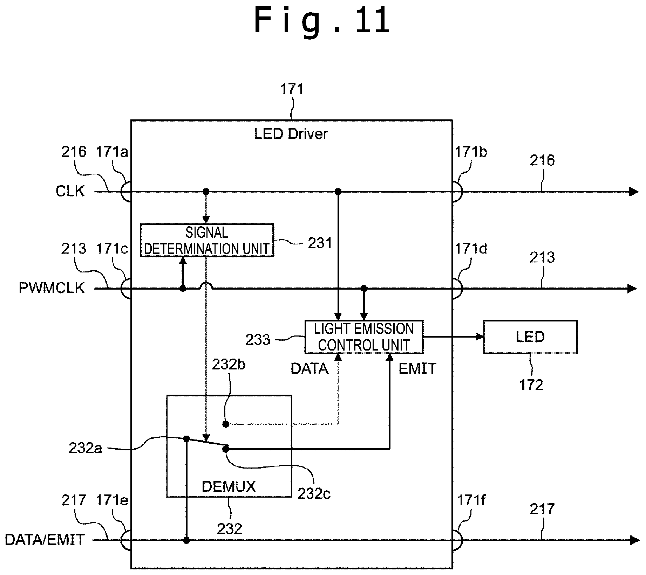

   Fig. 11 is a diagram illustrating a switching operation of a switch in a demultiplexer of the LED driver in Fig. 9.
[Fig. 12]

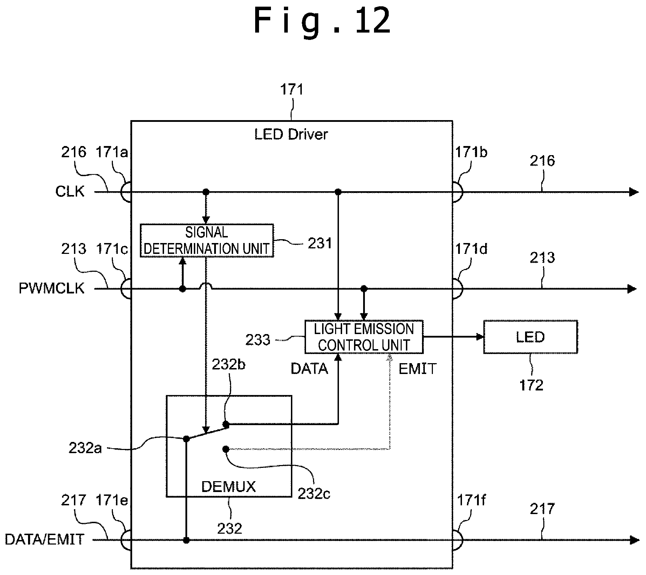

   Fig. 12 is a diagram illustrating a switching operation of the switch in the demultiplexer of the LED driver in Fig. 9.
[Fig. 13]

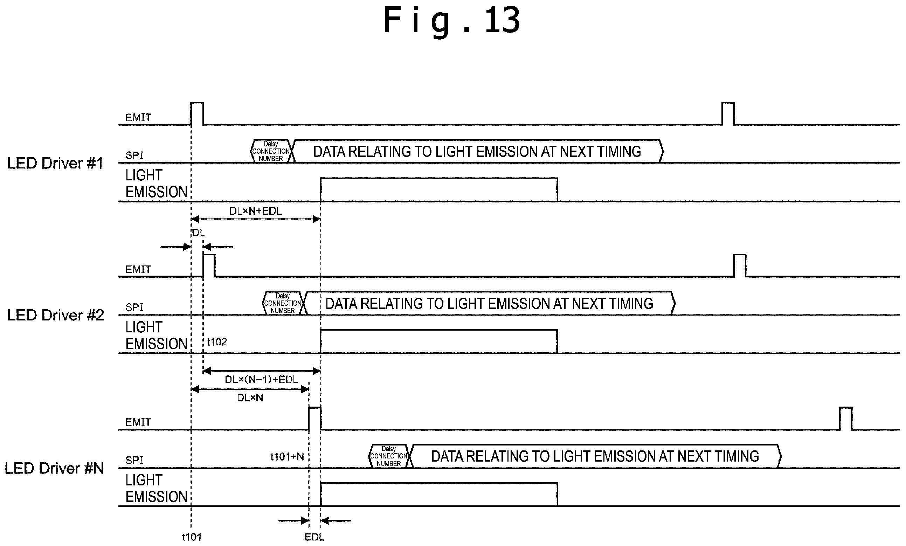

   Fig. 13 is a diagram illustrating a synchronization signal, a data signal, and a light emission timing.
[Fig. 14]

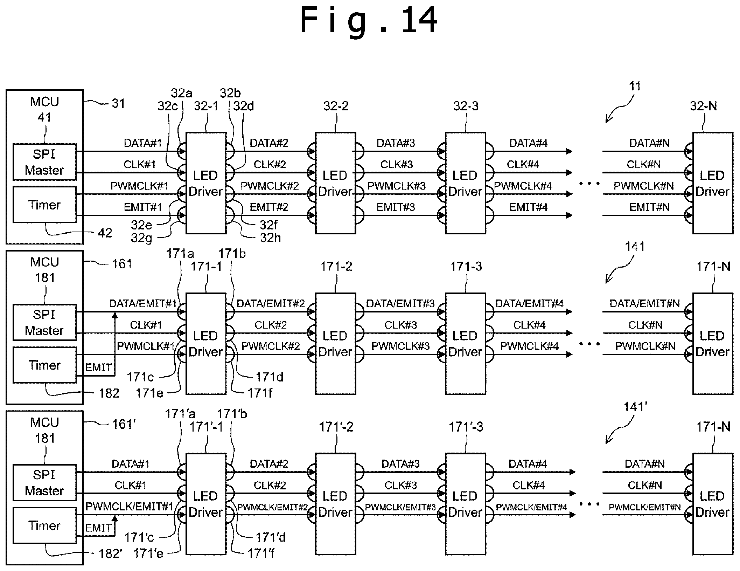

   Fig. 14 is a diagram illustrating a configuration example of a second embodiment of a control system in a backlight LED-mounted substrate.
[Fig. 15]

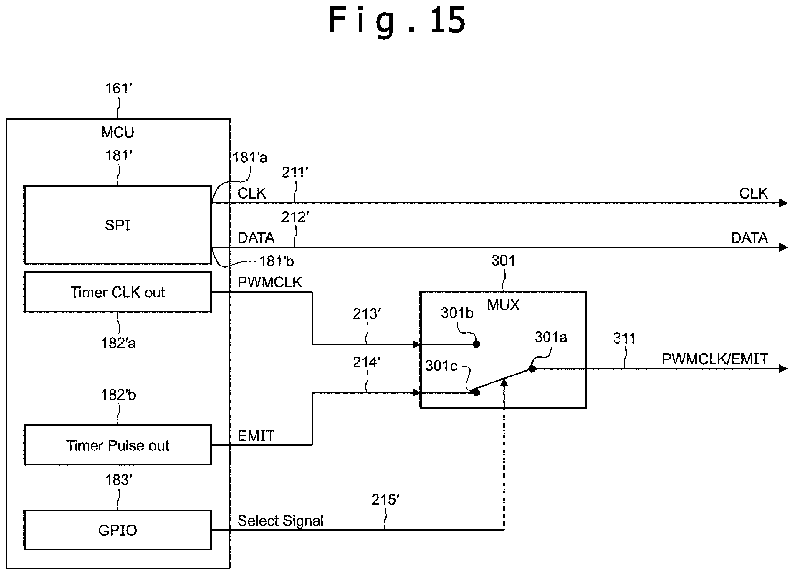

   Fig. 15 is a diagram illustrating a configuration example of a second embodiment of a multiplexer used for superimposing a synchronization signal on a data signal.
[Fig. 16]

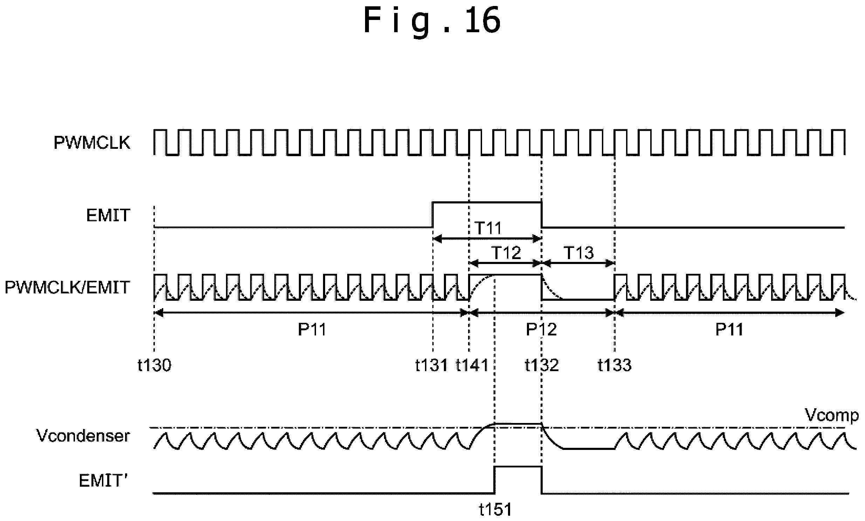

   Fig. 16 is a waveform diagram illustrating a switching operation of a switch in the multiplexer of Fig. 15.
[Fig. 17]

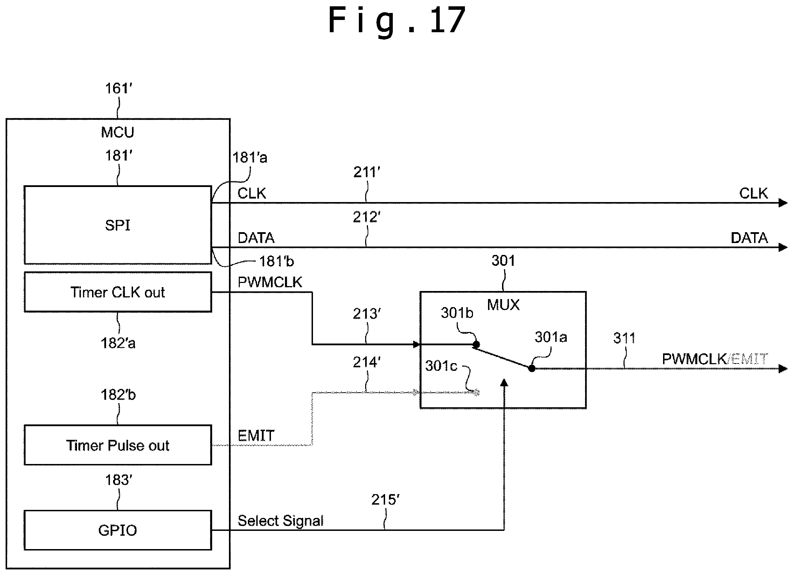

   Fig. 17 is a diagram illustrating a switching operation of the switch in the multiplexer of Fig. 15.
[Fig. 18]

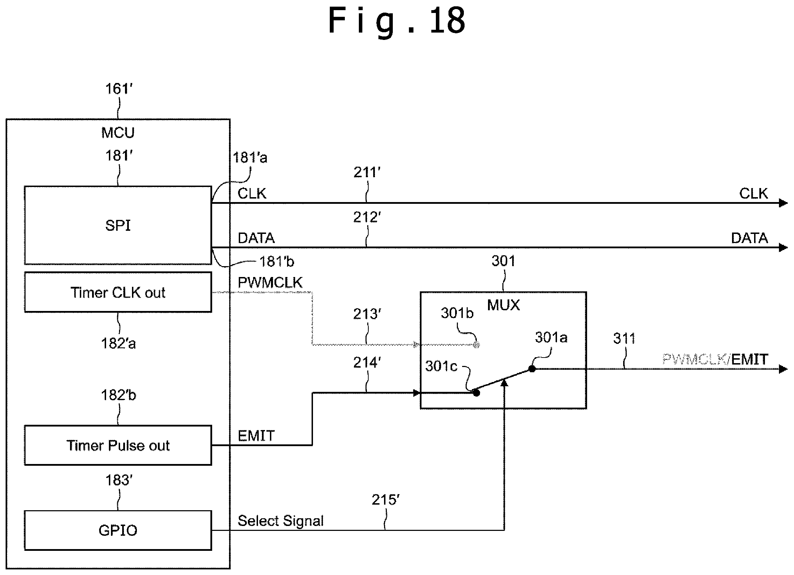

   Fig. 18 is a diagram illustrating a switching operation of the switch in the multiplexer of Fig. 15.
[Fig. 19]

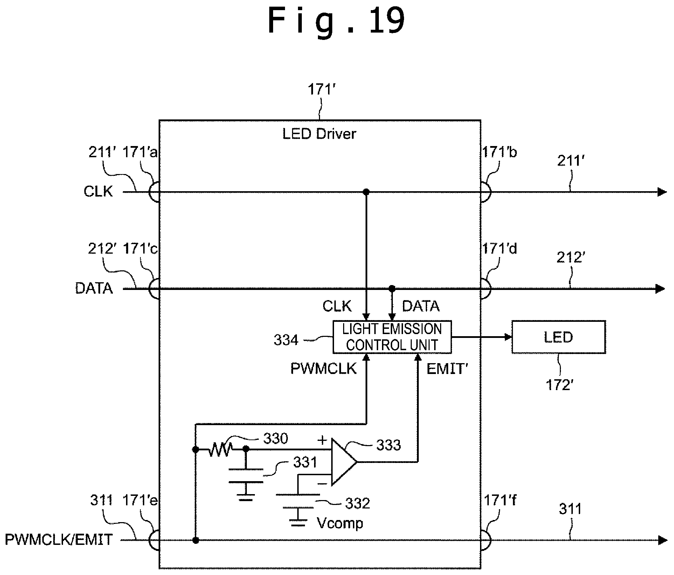

   Fig. 19 is a diagram illustrating a configuration example of a second embodiment of an LED driver corresponding to the multiplexer in Fig. 15.

### Description of Embodiments

Preferred embodiments of the present disclosure will be described in detail below with reference to the accompanying drawings. Note that, in the present specification and the drawings, constituent components having substantially the same functional configuration are denoted by the same reference numeral, and redundant description thereof will be omitted.

Hereinafter, embodiments for implementing the present technology will be described. Description will be made in the following order.
1. Overview of Present Disclosure
2. First Embodiment
3. Second Embodiment

### 1. Overview of Present Disclosure

In particular, an aim of the present disclosure is to omit a terminal for a light emission synchronization signal by transmitting the light emission synchronization signal superimposed on another signal, and thus, to achieve a reduction in the cost and size of an LED driver. Consequently, first, an overview of the present disclosure will be described.

Fig. 1 illustrates, in an upper row and a lower row, two types of general configuration examples of a backlight control system in a display apparatus.

A backlight control system 11 illustrated in the upper row of Fig. 1 includes a plurality of light-emitting diode (LED) drivers 32-1 to 32-N and a micro controller unit (MCU) 31 that controls the plurality of LED drivers 32-1 to 32-N.

Note that, hereinafter, when the LED drivers 32-1 to 32-N are not particularly distinguished from each other, the LED drivers 32-1 to 32-N are simply referred to as the LED driver 32. Other components are also referred to in a similar manner.

The LED driver 32 is provided as one system or as a plurality of systems for each of panels including a plurality of light-emitting diodes (LEDs), and controls light emission of the plurality of LEDs provided in each panel, based on a control signal from the MCU 31.

The plurality of LED drivers 32 are connected in a daisy chain. More specifically, the LED drivers 32-1 to 32-N are connected in a chain from the MCU 31 in the order of the following reference numerals starting with "32-".

The MCU 31 is a so-called microcomputer and controls light emission of each of the LEDs in each LED driver 32 among the plurality of LED drivers 32-1 to 32-N. The MCU 31 functions as a master in serial peripheral interface (SPI) communication, and controls the plurality of LED drivers 32-1 to 32-N functioning as slaves, to control the light emission of each of the LEDs.

More specifically, the MCU 31 includes an SPI communication control unit (SPI Master) 41 used for communicating a control signal for controlling light emission of each LED in the LED driver 32, and a light emission synchronization signal control unit (Timer) 42 that outputs, at predetermined time intervals, a light emission synchronization signal for controlling a light emission timing.

The SPI communication control unit (SPI Master) 41 outputs, to the LED driver 32-1, a data signal DATA for controlling the light emission of the LEDs controlled by the LED driver 32. The data signal DATA is a data signal including, for example, a duty ratio, a current value, a light emission delay setting time, and the like, which are necessary for performing pulse width modulation (PWM) and current control of the brightness relating to the light emission by the LEDs.

The light emission synchronization signal control unit (Timer) 42 outputs, at predetermined time intervals, a light emission synchronization signal EMIT for controlling a light emission timing in each of the LED drivers 32.

The LED drivers 32 each include a terminal for receiving the data signal DATA transmitted from an MCU 51 or the LED driver 32 in a preceding stage, and a terminal for transmitting the received data signal DATA to the LED driver 32 in a subsequent stage, and the terminals are connected in a daisy chain.

The LED drivers 32 each include a terminal for receiving the light emission synchronization signal EMIT transmitted from the MCU 51 or the LED driver 32 in the preceding stage, and a terminal for transmitting the received light emission synchronization signal EMIT to the LED driver 32 in the subsequent stage.

Accordingly, in the backlight control system 11 illustrated in the upper row of Fig. 1, when the MCU 31 transmits the data signal DATA and the light emission synchronization signal EMIT, the LED driver 32-1 in the subsequent stage receives the data signal DATA and the light emission synchronization signal EMIT as a data signal DATA #1 and a light emission synchronization signal EMIT #1, respectively.

The LED driver 32-1 transmits the received data signal DATA #1 and the received light emission synchronization signal EMIT #1 to the LED driver 32-2 in the subsequent stage as a data signal DATA #2 and a light emission synchronization signal EMIT #2.

The LED driver 32-2 receives the data signal DATA #2 and the light emission synchronization signal EMIT #2, and transmits the received data signal DATA #2 and the received light emission synchronization signal EMIT #2 to the LED driver 32-3 in the subsequent stage as a data signal DATA #3 and a light emission synchronization signal EMIT #3.

The data signal DATA and the light emission synchronization signal EMIT transmitted from the MCU 31 are transmitted by a relay method in each of the LED drivers 32-1 to 32-N, and are transmitted to the LED driver 32-N in the last stage. Note that there are signals transmitted from the MCU 31 other than the data signal DATA and the light emission synchronization signal EMIT, but only the latter two types of signals will be described here in order to simplify the description of the outline of the present disclosure.

The data signal DATA and the light emission synchronization signal EMIT are each delayed when passing the LED drivers 32 one by one. However, each of the LED drivers 32 recognizes the number at which the LED driver 32 is connected, starting from the MCU 31. Therefore, each of the plurality of LED drivers 32 adjusts the timing in consideration of a transmission delay time of the light emission synchronization signal EMIT to the LED driver 32-N in the last stage, and controls light emission of the LEDs, based on the data signal DATA.

Accordingly, the plurality of LED drivers 32 can cause the LEDs to emit light at a brightness based on the same data signal DATA and at a timing synchronized based on the light emission synchronization signal EMIT.

It is known that the number of terminals in the LED driver is a rate-limiting factor for the manufacturing cost and the device size.

Therefore, in order to reduce the cost of the LED driver and realize a reduction in the size, it is necessary to reduce the number of terminals.

In view of this, in the present disclosure, the light emission synchronization signal is superimposed on the data signal and transmitted. Thus, the number of wiring lines required for transmitting the two signals is reduced, and as a result, the number of terminals in the LED driver 32 can be decreased.

That is, for example, as illustrated in a control system 51 in the lower part of Fig. 1, by superimposing the light emission synchronization signal on the data signal, the wiring lines of the two signals are integrated, and the number of terminals required in the LED driver 32 is reduced.

The control system 51 illustrated in the lower part of Fig. 1 includes an MCU 71 and a plurality of LED drivers 72-1 to 72-N. Here, the MCU 71 and the plurality of LED drivers 72-1 to 72-N have configurations corresponding to the MCU 31 and the plurality of LED drivers 32-1 to 32-N, and the basic functions are the same.

Furthermore, the MCU 71 includes an SPI communication control unit (SPI Master) 81 and a synchronization signal control unit (Timer) 82. The SPI communication control unit 81 and the synchronization signal control unit 82 have configurations corresponding to the SPI communication control unit (SPI Master) 41 and the synchronization signal control unit (Timer) 42, respectively, and have the same basic functions.

That is, in the control system 51 illustrated in the lower part of Fig. 1, the light emission synchronization signal EMIT output by the light emission synchronization signal control unit (Timer) 82 is superimposed on the data signal DATA output by the SPI communication control unit (SPI Master) 81 in the MCU 71, so that the data signal DATA and the light emission synchronization signal EMIT are transmitted to the LED driver 72-1 through one wiring line.

The LED driver 72-1 receives the data signal DATA on which the light emission synchronization signal EMIT is superimposed, as the data signal DATA #1 on which the light emission synchronization signal EMIT #1 is superimposed, separates the signals, and uses the separated signals for controlling light emission.

The LED driver 72-1 transmits the received data signal DATA #1 on which the light emission synchronization signal EMIT #1 is superimposed, to the LED driver 72-2 in the subsequent stage, as the data signal DATA #2 on which the light emission synchronization signal EMIT #2 is superimposed.

Furthermore, the LED driver 72-2 receives the data signal DATA #2 on which the light emission synchronization signal EMIT #2 is superimposed, separates the signals, and uses the separated signals to control light emission.

The LED driver 72-2 transmits the received data signal DATA #2 on which the light emission synchronization signal EMIT #2 is superimposed, to the LED driver 72-3 in the subsequent stage, as the data signal DATA #3 on which the light emission synchronization signal EMIT #3 is superimposed.

The data signal DATA and the light emission synchronization signal EMIT transmitted from the MCU 71 are transmitted by a relay method in each of the LED drivers 72-1 to 72-N, and are transmitted to the LED driver 72-N in the last stage.

At this time, the data signal DATA is transmitted in a state in which the light emission synchronization signal EMIT is superimposed thereon, and thus, the signals can be transmitted through integrated wiring line.

Thus, it is possible to provide a configuration in which the two terminals that transmit and receive only the light emission synchronization signal EMIT are omitted in each of the LED drivers 72.

As a result, in the LED driver 72, it is possible to omit the two terminals that transmit and receive only the light emission synchronization signal EMIT. Therefore, it is possible to reduce the manufacturing cost relating to the two terminals and to omit the space for forming the two terminals, so that it is possible to realize a reduction in the size of the device.

### 2. First Embodiment

### Configuration Example of Display Apparatus

Next, a configuration example of a display apparatus according to the present disclosure will be described with reference to Fig. 2. The left part in Fig. 2 is an exploded view of a liquid crystal panel 121 and a backlight panel 122 in the display apparatus 101. The upper right part in Fig. 2 is an enlarged view of a backlight light-emitting diode (LED)-mounted substrate 131 in the backlight panel 122. The lower right part in Fig. 2 is an enlarged view of an LED panel 151 in the backlight light-emitting diode (LED)-mounted substrate 131.

As illustrated in the left part of Fig. 2, the display apparatus 101 includes the liquid crystal panel 121 provided on a surface thereof, and the backlight panel 122.

The liquid crystal panel 121 is provided in a preceding stage of a light-emitting surface of the backlight panel 122. The liquid crystal panel 121 uses a non-illustrated control circuit to electrically control the liquid crystal in units of pixels to optically change the transmittance of light emitted from the backlight panel 122 and thus, display an image.

The backlight panel 122 emits light serving as a light source and causes the light to pass through the liquid crystal panel 121.

The backlight panel 122 includes a plurality of backlight light-emitting diode (LED)-mounted substrates 131-1 to 131-12.

Fig. 2 illustrates an example of the backlight panel 122 including a total of 12 backlight LED-mounted substrates 131 arranged at two levels in the vertical direction and in six rows in the horizontal direction. However, the number of backlight LED-mounted substrates 131 is not limited to 12, and may be any other number.

As illustrated in the upper right part of Fig. 2, each of the backlight LED-mounted substrates 131 includes a plurality of LED panels 151-1 to 151-M.

As illustrated in the lower right part of Fig. 2, the LED panels 151 each include an LED driver 171 and a plurality of light-emitting diodes (LEDs) 172-1 to 172-6.

Fig. 2 illustrates an example in which the six LEDs 172-1 to 172-6 are provided in each one of the LED panels 151. However, the number of the LEDs 172 is not limited to six.

The number of the LEDs 172 provided in the LED panel 151 relates to the design and is not an essential issue in the description of the present disclosure. Therefore, in the present specification, a configuration example in which the number of the LEDs 172 is different from six may be described as necessary, in order to simplify the description.

The MCU 161 (Fig. 3) has a configuration corresponding to the one of the above-described MCU 71, and includes a so-called microcomputer. That is, the MCU 161 controls the LED driver 171 in each of the plurality of LED panels 151-1 to 151-M to control the light emission of the LEDs 172 in the LED panel 151. Note that the MCU 161 is provided in another, not illustrated substrate included in the display apparatus 101, which is not illustrated in Fig. 2.

More specifically, the MCU 161 functions as a master in the SPI communication, and controls the LED driver 171 in each of the plurality of LED panels 151 functioning as slaves, to control light emission of each of the plurality of LEDs 172 provided in the LED panel 151.

### Wiring Line Configuration in Backlight LED-mounted Substrate of Present Disclosure

Next, a configuration of wiring lines between the LED driver 171 and the LEDs 172 in the backlight LED-mounted substrate 131 of the present disclosure will be described.

In the configuration of a display apparatus, it is conceivable to reduce the size by laminating a substrate on which the LED driver 171 is mounted and a substrate on which the LEDs 172 are mounted to reduce the area on the surface. However, the laminated wiring lines increase the cost as compared with a single-layer wiring line.

Furthermore, in the single-layer wiring line, the number of intersections of between wiring lines is reduced as much as possible and the wiring line is simplified as much as possible, so that the cost relating to manufacturing can be reduced. Therefore, the plurality of connected LEDs 172 are preferably connected by a daisy chain-type wiring line including wires connected in a chain, rather than a star-type wiring line (not illustrated) including wires connecting the plurality of LED drivers 171 radially with the MCU as a center.

Thus, in order to reduce the cost relating to manufacturing and to realize a reduction in the size of the device, the display apparatus of the present disclosure has a configuration in which the LED drivers 171-1, 171-2, 171-3, ..., and 171-8 are connected in a chain by a daisy chain-type wiring line.

That is, in the control system of the backlight LED-mounted substrate 131 according to the present disclosure, the plurality of LED drivers 171 are connected by a simple daisy chain-type wiring line, and the light emission of the LEDs 172 connected to each of the LED drivers 171 is controlled.

### Configuration Example of Control System in Backlight LED-mounted Substrate

Next, an example of the configuration of a control system of the LED driver 171 in the backlight LED-mounted substrate 131 will be described with reference to Fig. 3.

Note that the upper row of Fig. 3 illustrates a detailed configuration example of the control system 11 of the MCU 31 and the LED driver 32 illustrated in the upper row of Fig. 1, for comparison with the configuration example of a control system 141 of the LED driver 171 in the backlight LED-mounted substrate 131 of the present disclosure illustrated in the lower row of Fig. 3.

As illustrated in the upper row of Fig. 3, the MCU 31 includes the SPI communication control unit (SPI Master) 41 used for communicating a data signal for controlling the brightness of light emission of each LED in the LED driver 32, and the light emission synchronization signal control unit (Timer) 42 that outputs, at predetermined time intervals, a light emission synchronization signal for controlling a light emission timing.

The SPI communication control unit (SPI Master) 41 outputs the data signal DATA for controlling the brightness of each of the LED drivers 32, to the LED driver 32-1 via a data signal wiring line. At this time, the SPI communication control unit (SPI Master) 41 outputs, via an SPI communication clock wiring line, a clock signal CLK for SPI communication (hereinafter, also simply referred to as a clock signal CLK) required to transmit and receive the data signal DATA.

The light emission synchronization signal control unit (Timer) 42 outputs, via a light emission synchronization signal wiring line at predetermined time intervals, the light emission synchronization signal EMIT for controlling the light emission timing in each of the LED drivers 32. The light emission synchronization signal control unit 42 outputs, via a pulse width modulation (PWM) clock signal wiring line, a PWM clock signal PWMCLK for performing PWM control of the brightness in the LED driver 32.

The LED driver 32 includes eight terminals 32a to 32h for transmitting and receiving the data signal DATA, the clock signal CLK, the PWM clock signal PWMCLK, and the light emission synchronization signal EMIT, which are each transmitted from components in the preceding stage, via the data signal wiring line, the SPI communication clock wiring line, the light emission synchronization signal wiring line, and the PWM clock signal wiring line.

Accordingly, in the upper row of Fig. 3, the LED driver 32-1 receives the data signal DATA #1, based on a clock signal CLK #1 from the SPI communication control unit (SPI Master) 41. Based on a timing of the light emission synchronization signal EMIT #1 from the light emission synchronization signal control unit (Timer) 42, the LED driver 32-1 performs PWM control, based on a PWM clock signal PWMCLK #1, to cause the LEDs to emit light at a brightness in accordance with the data signal DATA #1.

The LED driver 32-1 transmits the data signal DATA #1, the clock signal CLK #1, the PWM clock signal PWMCLK #1, and the light emission synchronization signal EMIT #1 to the LED driver 32-2 in the subsequent stage, as the data signal DATA #2, a clock signal CLK #2, a PWM clock signal PWMCLK #2, and the light emission synchronization signal EMIT #2.

Similarly, the LED driver 32-2 receives the data signal DATA #2, based on the clock signal CLK #2 from the LED driver 32-1. Based on a timing of the light emission synchronization signal EMIT #2 from the LED driver 32-1, the LED driver 32-2 performs PWM control based on the PWM clock signal PWMCLK #2, to cause the LEDs to emit light at a brightness in accordance with the data signal DATA #2.

Furthermore, the LED driver 32-2 transmits the data signal DATA #2, the clock signal CLK #2, the PWM clock signal PWMCLK #2, and the light emission synchronization signal EMIT #2 to the LED driver 32-3 in the subsequent stage, as the data signal DATA #3, a clock signal CLK #3, a PWM clock signal PWMCLK #3, and the light emission synchronization signal EMIT #3.

Thereafter, a data signal DATA #N, a clock signal CLK #N, a PWM clock signal PWMCLK #N, and a light emission synchronization signal EMIT #N are transmitted to the LED driver 32-N, and a similar process is executed to control the light emission of the LEDs.

However, as described above, it is known that the number of terminals in the LED driver is a rate-limiting factor for the manufacturing cost and the device size.

Therefore, in order to reduce the cost of the LED driver and realize a reduction in size, it is necessary to reduce the number of terminals.

In view of this, in the backlight LED-mounted substrate 131 of the present disclosure, the light emission synchronization signal is superimposed on the data signal and transmitted. Thus, the number of wiring lines required for transmitting the two signals is reduced, and as a result, the number of terminals in the LED driver decreases.

That is, for example, as illustrated in the control system 141 of the backlight LED-mounted substrate 131 in the lower part of Fig. 3, by superimposing the light emission synchronization signal on the data signal, the wiring lines of the two signals are integrated, and the number of terminals required in the LED driver 171 is reduced.

The control system 141 of the backlight LED-mounted substrate 131 of the present disclosure in the lower part of Fig. 3 includes the MCU 161 and the LED drivers 171-1 to 171-N.

The MCU 161 has a configuration corresponding to the above-described MCU 71, and includes a so-called microcomputer. That is, the MCU 161 controls the LED driver 171 in each of the plurality of LED panels 151-1 to 151-M to control the light emission of the LEDs 172 in the LED panel 151.

More specifically, the MCU 161 functions as a master in the SPI communication, and controls the LED driver 171 in each of the plurality of LED panels 151 functioning as slaves, to control the light emission of each of the plurality of LEDs 172 provided in the LED panel 151.

An SPI communication control unit (SPI Master) 181 and a light emission synchronization signal control unit (Timer) 182 are provided in the MCU 161 of the control system 141 of the backlight LED-mounted substrate 131 according to the present disclosure illustrated in the lower part of Fig. 3. The SPI communication control unit 181 and the light emission synchronization signal control unit 182 have configurations corresponding to the SPI communication control unit (SPI Master) 41 and the light emission synchronization signal control unit (Timer) 42, respectively, and have the same basic functions.

That is, in the control system 141 of the backlight LED-mounted substrate 131 of the present disclosure, the light emission synchronization signal EMIT #1 output from the light emission synchronization signal control unit (Timer) 182 is superimposed on the data signal DATA #1 output from the SPI communication control unit (SPI Master) 181 in the MCU 161, and thus, the data signal DATA #1 and the light emission synchronization signal EMIT #1 are transmitted to the LED driver 171-1 through one wiring line.

The LED driver 171-1 receives the data signal DATA #1 on which the light emission synchronization signal EMIT #1 is superimposed, from the SPI communication control unit (SPI Master) 181. Based on the timing of the light emission synchronization signal EMIT #1, the LED driver 171-1 performs PWM control, based on the PWM clock signal PWMCLK #1 from the light emission synchronization signal control unit (Timer) 182, to cause the LEDs 172 to emit light at a brightness in accordance with the data signal DATA #1.

The LED driver 171-1 transmits the data signal DATA/EMIT #1 on which the light emission synchronization signal is superimposed, the clock signal CLK #1, and the PWM clock signal PWMCLK #1, to the LED driver 171-2 in the subsequent stage, as a data signal DATA/EMIT #2 on which the light emission synchronization signal is superimposed, the clock signal CLK #2, and the PWM clock signal PWMCLK #2.

Similarly, the LED driver 171-2 receives the data signal DATA/EMIT #2 on which the light emission synchronization signal from the LED driver 171-1 is superimposed, the clock signal CLK #2, and the PWM clock signal PWMCLK #2. Based on the timing of the light emission synchronization signal EMIT #2, the LED driver 171-2 performs PWM control, based on the PWM clock signal PWMCLK #2 from the synchronization signal control unit (Timer) 182, to cause the LEDs 172 to emit light at a brightness in accordance with the data signal DATA #2.

The LED driver 171-2 transmits the data signal DATA/EMIT #2 on which the light emission synchronization signal is superimposed, the clock signal CLK #2, and the PWM clock signal PWMCLK #2, to the LED driver 171-3 in the subsequent stage, as a data signal DATA/EMIT #3 on which the light emission synchronization signal is superimposed, the clock signal CLK #3, and the PWM clock signal PWMCLK #3.

Thereafter, a data signal DATA/EMIT #N on which the light emission synchronization signal is superimposed, the clock signal CLK #N, and the PWM clock signal PWMCLK #N, are transmitted to the LED driver 171-N, and a similar process is executed, to control the light emission of the backlight LED-mounted substrate 131.

Thus, the data signal DATA and the synchronization signal EMIT transmitted from the MCU 161 are transmitted by a relay method in each of the LED drivers 171-1 to 171-N, and are transmitted to the LED driver 171-N in the last stage.

At this time, the data signal DATA is transmitted in a state in which the light emission synchronization signal EMIT is superimposed thereon, and thus, the signals can be transmitted through integrated wiring line.

Therefore, each of the LED drivers 171 includes six terminals 171a to 171f for transmitting and receiving the data signal DATA on which the light emission synchronization signal EMIT is superimposed, the clock signal CLK, and the PWM clock signal PWMCLK, which are transmitted from components in the preceding stage, via the data signal wiring line, the SPI communication clock wiring line, and the PWM clock signal wiring line. That is, in the LED driver 171 of the present disclosure illustrated in the lower row of Fig. 3, it is possible to employ a configuration in which two terminals for transmitting and receiving only the light emission synchronization signal EMIT are omitted from the terminals 32a to 32h in the LED driver 32 in the upper row of Fig. 3.

As a result, in the LED driver 171, two terminals, that is, a terminal for receiving the light emission synchronization signal EMIT and a terminal for transmitting the light emission synchronization signal EMIT are omitted. Therefore, it is possible to reduce the cost relating to manufacturing and to omit the space for arranging the two terminals, so that the size of the device can be reduced.

### Configuration Example of Superimposing Light Emission Synchronization Signal on Data Signal

Next, a configuration example of superimposing the light emission synchronization signal on the data signal will be described with reference to Fig. 4.

Fig. 4 illustrates a detailed configuration example of the MCU 161 that superimposes the light emission synchronization signal on the data signal, and multiplexers 201 and 202 provided in a subsequent stage.

The MCU 161 includes the SPI communication control unit (SPI Master) 181, the light emission synchronization signal control unit (Timer) 182 including a PWM clock signal output terminal (Timer CLK out) 182a and a light emission synchronization signal output terminal (Timer Pulse out) 182b, and a switching signal output terminal (General Purpose Input/Output (GPIO)) 183.

The SPI communication control unit (SPI Master) 181 includes terminals 181a and 181b, outputs the clock signal CLK to a terminal 201b of the multiplexer (MUX) 201 via the terminal 181a and a wiring line 211, and outputs the data signal DATA to the terminal 202b of the multiplexer (MUX) 202 via the terminal 181b and a wiring line 212.

The PWM clock signal output terminal 182a outputs, via a wiring line 213, the PWM clock signal PWMCLK for controlling the brightness in the LED driver 171 by pulse width modulation (PWM).

The light emission synchronization signal output terminal 182b outputs, to a terminal 202c of the multiplexer (MUX) 202 via a wiring line 214 at predetermined time intervals, the light emission synchronization signal EMIT formed of a pulse waveform for controlling a light emission timing in each of the LED drivers 32.

The switching signal output terminal 183 outputs a control signal for controlling switches 201a and 202a of the multiplexers 201 and 202 via a wiring line 215, and controls the switches 201a and 202a of the multiplexers 201 and 202 to switch and connect the switches 201a and 202a to any one of the terminals 201b and 201c and the terminals 202b and 202c, respectively. The terminal 201c of the multiplexer 201 is connected to a ground terminal, and when the switch 201a is connected to the terminal 201c, a Low signal is output from the multiplexer 201 to the LED driver 171 in the subsequent stage.

The multiplexer 201 outputs a signal supplied via the terminals 201b and 201c to which the switch 201a controlled by the switching signal output terminal 183 is connected, to the LED driver 171 in the subsequent stage via a wiring line 216. That is, the multiplexer 201 outputs the clock signal CLK to the subsequent stage, when the switch 201a is connected to the terminal 201b, and outputs the Low signal to the subsequent stage, when the switch 201a is connected to the terminal 201c.

The multiplexer 202 outputs a signal supplied via the terminals 202b and 202c to which the switch 202a controlled by the switching signal output terminal 183 is connected, to the LED driver 171 in the subsequent stage via a wiring line 217. That is, the multiplexer 202 outputs the data signal DATA to the subsequent stage, when the switch 202a is connected to the terminal 202b, and outputs the light emission synchronization signal EMIT to the subsequent stage, when the switch 202a is connected to the terminal 202c.

The multiplexers 201 and 202 are controlled by the MCU 161, and thus, it can be said that the multiplexers 201 and 202 substantially function as a part of the MCU 161.

### Switching Control of Switches in Multiplexers of Fig. 4

Next, a signal waveform output from the MCU 161 and the switching control of the switches 201a and 202a in the multiplexers 201 and 202 will be described with reference to Figs. 5 to 8.

The waveform diagram of Fig. 5 illustrates, in the order from the top in the drawing, waveforms of the SPI communication clock signal CLK output from the terminal 181a, the data signal DATA output by the terminal 181b, the light emission synchronization signal EMIT output from the light emission synchronization signal output terminal (Timer Pulse out) 182b, and output signals from the multiplexers 201 and 202.

In each of the waveforms, a first period P1 to a fourth period P4 are set, and the waveforms of the output signals from the multiplexers 201 and 202 are changed by the switching control of the switches 201a and 202a of the multiplexers 201 and 202 in each period. The first period P1 to the fourth period P4 are sequentially repeated.

The first period P1, which is a period until a time t1 in Fig. 5, is a preparatory period of the output signal from the multiplexer 202, and is a period in which a Hi signal is output and a signal not utilized for performing control is output.

The second period P2 from the time t1 to a time t2 is a period in which an announcement signal is output that indicates that the signal output from the multiplexer 202 is not the data signal DATA but the light emission synchronization signal EMIT, in the third period P3 in the subsequent stage.

The announcement signal is defined as a signal by which the opposite polarity of the clock signal CLK in a non-communication period is maintained in the clock signal CLK during a predetermined period T1 or longer. For example, when the polarity of the clock signal CLK in the non-communication period is a Low signal, the announcement signal is a signal by which a High (Hi) signal is maintained as an invalid signal during the predetermined period T1 or longer.

The third period P3 from the time t2 to a time t3 is a period in which the multiplexer 202 outputs the light emission synchronization signal EMIT.

The fourth period P4 from the time t3 to a time t4 is a period in which the multiplexer 202 outputs the data signal DATA.

From the time t4 and later, the processing returns to the first period P1 at the time t1 and before, and the subsequent processes are repeated.

That is, as illustrated in the uppermost row of Fig. 5, the terminal 181a that outputs the clock signal CLK outputs a Hi signal as an invalid signal that is not the clock signal CLK in the first period P1 including a preparatory period, in the second period P2 in which the announcement signal indicating that the light emission synchronization signal EMIT is output in the subsequent period (the third period P3) is output, and in the third period P3 in which the light emission synchronization signal EMIT is output.

In the fourth period P4 from the time t3 to the time t4, the terminal 181a outputs, at a time t11 that is a predetermined timing after the time t3 has elapsed, the clock signal CLK for transmitting and receiving the data signal DATA by SPI communication, when the predetermined period T1 has elapsed, from the time t11 when the signal drops to the Low signal.

As illustrated in the second row from the top in Fig. 5, the terminal 181b outputting the data signal DATA outputs a Hi signal as an invalid signal, which is not the data signal DATA, from the first period P1 including the preparatory period to the third period P3.

The signal output by the terminal 181b drops to a Low signal at the time t11 after the time t3 has elapsed, and then, the terminal 181b outputs the data signal DATA, in synchronization with the terminal 181a, in the fourth period P4 from the time t3 to the time t4.

The light emission synchronization signal output terminal 182b outputs a Low signal as an invalid signal in the first period P1 and the second period P2, outputs the light emission synchronization signal EMIT at a timing of controlling light emission in the third period P3, and outputs a Low signal as an invalid signal in the fourth period P4.

As described above, a process is repeated in which, when the first period P1 has elapsed, the announcement signal announcing in advance that the light emission synchronization signal EMIT is to be output in the third period P3 in the subsequent stage is output in the second period P2, the light emission synchronization signal EMIT is output in the third period P3, and the clock signal CLK and the data signal DATA are output in the fourth period P4.

In the third period P3, in order to superimpose the light emission synchronization signal EMIT on the data signal DATA, it is only required that the multiplexer 202 selectively outputs the light emission synchronization signal EMIT to the wiring line 217, which normally serves as a data signal wiring line for transmitting the data signal DATA, and selectively outputs the data signal DATA in the first period P1 and the fourth period P4.

In this case, the LED driver 171 in the subsequent stage needs to be able to identify which signal among the light emission synchronization signal EMIT and the data signal DATA is transmitted to the wiring line 217 in which the data signal DATA is normally transmitted. Therefore, the multiplexer 201 controls the clock signal CLK from the terminal 181a and the wiring line 211, so that information for identifying which signal is transmitted is added to the front part of each of the light emission synchronization signal EMIT and the data signal DATA.

More specifically, in the first period P1, the switching signal output terminal 183 outputs a predetermined control signal to the multiplexers 201 and 202 via the wiring line 215, and controls the switches 201a and 202a so that the switches 201a and 202a are connected to the terminals 201b and 202b, respectively, as illustrated in Fig. 6. Note that, in Fig. 6, the names of signals output to the LED driver 171 in the subsequent stage and the wiring lines used for outputting the signals are indicated in black, and the names of signals that are not output to the LED driver 171 in the subsequent stage and the wiring lines not used for outputting signals are indicated in gray, and similar indications are used in the following description.

Thus, as illustrated in the fourth row and the fifth row in Fig. 5, in the first period P1 serving as a preparatory period, the multiplexers 201 and 202 output Hi signals that are output from the terminals 181a and 181b, respectively. The Hi signals output from the terminals 181a and 181b are invalid signals, and thus, are not used for controlling the light emission in the LED driver 171 in the subsequent stage.

Next, in the second period P2, the switching signal output terminal 183 outputs a predetermined control signal to the multiplexers 201 and 202 via the wiring line 215, and as illustrated in Fig. 7, controls the switch 201a of the multiplexer 201 to connect the switch 201a to the terminal 201c, and controls the switch 202a so that the switch 202a is in a non-connected state and maintains a similar control state during a time longer than the predetermined period T1.

Thus, as illustrated in the fourth row and the fifth row in Fig. 5, in the second period P2, serving as a period in which the announcement signal is output, the multiplexers 201 and 202 each output the Low signal during a time longer than the predetermined period T1. A pull-down resistor R is provided in the wiring line 217 on the output side of the multiplexer 202, and when the switch 202a is in a non-connected state, the Low signal is output by the wiring line 217.

As a result, the Low signal is output during a time longer than the predetermined period T1. Thus, the LED driver 171 in the subsequent stage can recognize that the clock signal CLK is the announcement signal for announcing in advance that the light emission synchronization signal EMIT is to be output in the third period P3 in the subsequent stage of the second period P2.

In the third period P3, the switching signal output terminal 183 outputs a predetermined control signal to the multiplexers 201 and 202 via the wiring line 215, and as illustrated in Fig. 8, controls the switch 201a of the multiplexer 201 to connect the switch 201a to the terminal 201c, and connects the switch 202a to the terminal 202c. The multiplexer 202 outputs the light emission synchronization signal EMIT from the light emission synchronization signal output terminal 182b.

Accordingly, as illustrated in the fourth row and the fifth row in Fig. 5, in the third period P3 serving as a period in which the light emission synchronization signal EMIT is output, the multiplexer 201 continuously outputs the Low signal, which is an invalid signal other than the clock signal CLK. The multiplexer 202 outputs the light emission synchronization signal EMIT at a timing for controlling the light emission.

As a result, the LED driver 171 in the subsequent stage can control the timing of light emission, based on a timing at which the light emission synchronization signal EMIT with a pulse shape is detected from the start timing of the third period P3.

In the fourth period P4, the switching signal output terminal 183 outputs a predetermined control signal to the multiplexers 201 and 202 via the wiring line 215, and controls the switches 201a and 202a of the multiplexers 201 and 202 to connect the switches 201a and 202a to the terminals 201b and 202b, respectively, as illustrated in Fig. 6.

Thus, as illustrated in the fourth row and the fifth row in Fig. 5, in the fourth period P4 serving as a period in which the data signal DATA is output, the clock signal CLK for SPI communication output from the terminal 181a and the data signal DATA output from the terminal 181b by SPI communication are output in synchronization with each other from the multiplexers 201 and 202.

As a result, the LED driver 171 in the subsequent stage can acquire the data signal DATA, based on the clock signal CLK for SPI communication supplied from the multiplexer 201.

Afterwards, the processing returns to the first period P1, and a similar process is repeated.

By controlling the operation of the multiplexers 201 and 202 as described above, the light emission synchronization signal EMIT and the data signal DATA are time-division multiplexed and output from the multiplexer 202 to the LED driver 171 in the subsequent stage with respect to the LED driver 171 in the subsequent stage via the wiring line 217, in the third period P3 and the fourth period P4, respectively.

Accordingly, the data signal DATA and the light emission synchronization signal EMIT can be transmitted to the LED driver 171 in the subsequent stage via the one wiring line 217 that is an integrated wiring line. Thus, two terminals for transmitting and receiving only the light emission synchronization signal EMIT can be omitted in the LED driver 171.

As a result, the two terminals that transmit and receive only the light emission synchronization signal EMIT can be omitted from the LED driver 171, and the physical space can be reduced. Therefore, it is possible to reduce the manufacturing cost relating to the two terminals and realize a reduction in the size of the device.

### Configuration Example of LED Driver in Fig. 3

Next, a configuration example of the LED driver 171 in Fig. 3 will be described with reference to Fig. 9.

The LED driver 171 includes a signal determination unit 231, a demultiplexer (DEMUX) 232, and a light emission control unit 233.

The signal determination unit 231 receives the clock signal CLK and the PWM clock signal PWMCLK supplied from the multiplexer 201 or the LED driver 171 in the preceding stage, via the wiring lines 213 and 216 and the terminals 171a and 171c. The signal determination unit 231 compares the received clock signal CLK with the PWM clock signal PWMCLK, and determines whether or not an announcement signal for announcing in advance that the light emission synchronization signal EMIT is output is supplied. Based on the determination result, the signal determination unit 231 supplies a predetermined control signal to the demultiplexer 232, and controls an operation of the demultiplexer 232.

The demultiplexer (DEMUX) 232 includes a switch 232a controlled based on the control signal supplied by the signal determination unit 231, a terminal 232b that outputs the data signal DATA supplied via the wiring line 217 and the terminal 171e from the multiplexer 202 in the previous stage or the LED driver 171 that transmits a signal output from the multiplexer 202 to the subsequent stage, and a terminal 232c that outputs the light emission synchronization signal EMIT.

When the signal determination unit 231 determines that the announcement signal announcing in advance that the light emission synchronization signal EMIT is output is supplied, the signal determination unit 231 connects the switch 232a to the terminal 232c.

That is, as described above, the announcement signal is supplied in the second period P2. In the third period P3 immediately after the second period P2, the light emission synchronization signal EMIT is supplied from the multiplexer 202 in the preceding stage or the LED driver 171 that transmits the signal output from the multiplexer 202 to the subsequent stage.

Therefore, the signal determination unit 231 controls the switch 232a of the demultiplexer 202 to connect the switch 232a to the terminal 232c, so that the signal supplied via the wiring line 217 and the terminal 171e is supplied to the light emission control unit 233 as the light emission synchronization signal EMIT.

On the other hand, when it is determined that the announcement signal is not supplied or when the third period P3 ends, the signal determination unit 231 connects the switch 232a to the terminal 232b.

As described above, the light emission synchronization signal EMIT is supplied only in the third period P3. That is, a timing after the third period P3 ends, the processing proceeds to the fourth period P4, and the multiplexer 202 or the LED driver 171 that transmits the signal output from the multiplexer 202 to the subsequent stage via the wiring line 217 and the terminal 171e can be regarded as the timing at which the data signal DATA is supplied.

After the fourth period P4, the processing proceeds again to the first period P1. Therefore, a timing until the announcement signal is supplied in the subsequent second period P2 is regarded as the timing at which the data signal DATA is supplied, and thus, the switch 232a is connected to the terminal 232b.

When the light emission synchronization signal EMIT is supplied from the demultiplexer 232, the light emission control unit 233 controls the light emission timing of each of the LEDs 172 in consideration of a delay time relating to the transmission, based on the stage of the LED driver 171 in the daisy chain connection counted from the MCU 161 from a timing at which the light emission synchronization signal EMIT formed of a waveform signal with a pulse shape for controlling the light emission timing of the LEDs 172 is received.

When the data signal DATA is supplied from the demultiplexer 232, the light emission control unit 233 receives and stores, in synchronization with the clock signal CLK, the data signal DATA for controlling the light emission of the LEDs 172, at the next timing such as a timing of the PWM control data for controlling the light emission of the LEDs 172, a current setting, and the delay time.

That is, when the light emission control unit 233 causes the LEDs 172 to emit light, based on the timing at which the light emission synchronization signal EIMT is received, the light emission control unit 233 utilizes the PWM clock signal PWMCLK to cause the LEDs 172 to emit light, based on the data signal DATA received at the immediately preceding timing.

The light emission control unit 233 causes the LEDs 172 to emit light, based on the data signal DATA received at the immediately preceding timing, and simultaneously, receives the data signal DATA for causing the LEDs 172 to emit light at the next timing.

More specifically, as described above, as illustrated in the second period P2 in the upper row of Fig. 10 in which the announcement signal of the light emission synchronization signal EMIT is output, the clock signal CLK output from the multiplexer 201 drops to the Low signal at the time t1, and then, the Low signal is continuously output as the invalid signal during a time longer than the predetermined period T1.

Furthermore, as illustrated in the fourth period P4 in the upper row of Fig. 10, if the normal clock signal CLK is output, the clock signal CLK is output from a timing at which the predetermined period T1 has elapsed from the timing at which the clock signal CLK output from the multiplexer 201 drops to the Low signal at the time t11.

The signal determination unit 231 uses the PWM clock signal PWMCLK having a sufficiently shorter cycle than the clock signal CLK, to measure the elapsed time from the timing at which the clock signal CLK drops, and determines whether or not the announcement signal is supplied, based on whether or not the clock signal CLK is output after the predetermined period T1 has elapsed.

For example, at the time t1 in Fig. 10, when the clock signal CLK is not output after the predetermined period T1 has elapsed from the timing at which the clock signal CLK drops, the signal determination unit 231 determines that the announcement signal is supplied.

Based on the determination result, the signal determination unit 231 connects the switch 232a of the demultiplexer 232 to the terminal 232c, as illustrated in Fig. 11.

Accordingly, in the third period P3 at the time t2 and later, the light emission control unit 233 receives the light emission synchronization signal EMIT from the terminal 232c of the demultiplexer 232.

Afterwards, for example, when the clock signal CLK rises, such as at the time t3, the signal determination unit 231 recognizes the end of the third period P3, determines that the normal data signal DATA is supplied, and connects the switch 232a of the demultiplexer 232 to the terminal 232b, as illustrated in Fig. 12.

For example, at the time t11 in Fig. 10, when the clock signal CLK is output after the predetermined period T1 has elapsed from the timing at which the clock signal CLK drops, the signal determination unit 231 determines that the light emission synchronization signal EMIT is not supplied, but the data signal DATA is supplied.

Based on the determination result, the signal determination unit 231 maintains a state in which the switch 232a of the demultiplexer 232 is connected to the terminal 232b, as illustrated in Fig. 12.

Accordingly, in the fourth period P4 at the time t3 and later, the light emission control unit 233 receives, from the terminal 232b of the demultiplexer 232, the data signal DATA for causing the LEDs 172 to emit light at the next timing.

### Relationship between Light Emission Synchronization Signal, Data Signal, and Light Emission Timing

Next, a relationship between the light emission synchronization signal, the data signal, and the light emission timing will be described with reference to Fig. 13.

As described above, the plurality of LED drivers 171 are connected to each other in a daisy chain, from the MCU 161.

Therefore, when the light emission synchronization signal EMIT is output from the MCU 161, the LED drivers 171 connected in the daisy chain receive the light emission synchronization signal EMIT in a state in which a delay is longer when the LED driver 171 is located at a later stage farther from the MCU 161.

Fig. 13 is a timing chart illustrating the timing of each of the LED drivers 171 in the order of the light emission synchronization signal EMIT, the data signal DATA (SPI), and the light emission timing from the top, when the LED driver (LED Driver #1) 171-1, the LED driver (LED Driver #2) 171-2, ..., and the LED driver (LED Driver #N) 171-N are connected in a daisy chain in this order from the MCU 161.

That is, when the light emission synchronization signal EMIT is output by the MCU 161 at a time t101, the LED driver (LED Driver #1) 171-1 connected immediately after the MCU 161 receives the light emission synchronization signal EMIT simultaneously with the output.

In contrast, the LED driver (LED Driver #2) 171-2 and the LED driver (LED Driver #N) 171-N receive the light emission synchronization signal EMIT with a delay corresponding to a time period obtained by multiplying a delay time DL generated when the light emission synchronization signal EMIT passes through one of the LED drivers 171 by the number of LED drivers 171 provided in the preceding stages of the LED driver (LED Driver #2) 171-2 and the LED driver (LED Driver #N) 171-N.

That is, the driver (LED Driver #2) 171-2 receives the light emission synchronization signal EMIT with a delay of the delay time DL * 1 from the one LED driver 171-1, and the LED driver (LED Driver #N) 171-N receives the light emission synchronization signal EMIT with a delay of the delay time DL * (N - 1) from the (N - 1) LED drivers 171-1 to 171-(N - 1).

Furthermore, the light emission synchronization signal EMIT is received in the fourth period P4 immediately after the above-mentioned third period P3, and thus, the data signal DATA is received at predetermined intervals. In the data signal DATA, a header portion includes information about the number of LED drivers 171 (the number of daisy connections) in the daisy chain connection, and a payload portion in the subsequent stage of the header portion includes data (such as a duty ratio for PWM control, a current value, and a light emission delay setting time) relating to light emission control at the next timing.

The light emission control unit 233 in each of the LED drivers 171 recognizes the stage from the MCU 161 at which the LED driver 171 is connected in the daisy chain connection. Therefore, the light emission control unit 233 causes the LEDs 172 to emit light at a timing in consideration of a delay time corresponding to the number of LED drivers 171 connected at subsequent stages of the LED driver 171 from the timing at which the light emission synchronization signal EMIT is received.

That is, the light emission control unit 233 of the LED driver 171-1 causes the LEDs 172 to emit light at a timing when a time period (DL * N + EDL) has elapsed from the timing at which the light emission synchronization signal EMIT is received. The time period (DL * N + EDL) is obtained by adding a light emission delay setting time EDL to the delay time DL * N of N stages of subsequent stages.

The light emission control unit 233 of the LED driver 171-2 causes the LEDs 172 to emit light at a timing when a time period (DL * (N - 1) + EDL) has elapsed from the timing at which the light emission synchronization signal EMIT is received. The time period (DL * (N - 1) + EDL) is obtained by adding the light emission delay setting time EDL to the delay time DL * N of (N - 1) stages of subsequent stages.

It is not necessary to consider the delay time from the timing at which the light emission synchronization signal EMIT is received, and thus, the light emission control unit 233 of the LED driver 171-N causes the LEDs 172 to emit light at a timing at which the light emission delay setting time EDL has elapsed.

As a result, the LED drivers 171-1 to 171-N can synchronize the LEDs 172 to cause the LEDs 172 to emit light simultaneously, in consideration of the delay time generated in the light emission synchronization signal EMIT by the daisy chain connection.

According to the above-described the configuration, the LED drivers 171 can receive the data signal DATA and the light emission synchronization signal EMIT in a time-division multiplexed manner, and thus, it is possible to employ a configuration in which two terminals, that is, a terminal required for receiving the light emission synchronization signal EMIT and a terminal required for transmitting the light emission synchronization signal EMIT are omitted.

Accordingly, it is possible to reduce the cost for manufacturing the two terminals, that is, the terminal required for receiving the light emission synchronization signal EMIT and the terminal required for transmitting the light emission synchronization signal EMIT.

Furthermore, the physical space used for providing the two terminals, that is, the terminal required for receiving the light emission synchronization signal EMIT and the terminal required for transmitting the light emission synchronization signal EMIT can be omitted in the LED driver 171, and thus, it is possible to realize a reduction in the size of the device configuration of the LED driver 171.

As a result, it is possible to simultaneously realize cost reduction and size reduction of the LED driver 171.

### 3. Second Embodiment

In the above, an example has been described in which the light emission synchronization signal EMIT relating to the light emission of the LEDs is superimposed on the data signal DATA, and thus, two terminals relating to the transmission and reception of the light emission synchronization signal EMIT are omitted, so that a reduction in cost and size of the device is realized.

However, the light emission synchronization signal EMIT may be superimposed on a signal other than the data signal DATA, and may be superimposed on the PWM clock signal PWMCLK instead of the data signal DATA, for example.

That is, for example, as illustrated in a control system 141' of the backlight LED-mounted substrate 131 in the lower part of Fig. 14, by superimposing the PWM clock signal PWMCLK on the light emission synchronization signal EMIT, the wiring lines of the two signals are integrated, and the number of terminals required in an LED driver 171' is reduced.

Note that the configurations in the upper row and the middle row in Fig. 14 illustrate similar configuration examples as the upper row and the lower row in Fig. 3, in order to compare the control system 141' of the backlight LED-mounted substrate 131 according to the second embodiment of the present disclosure with the control systems 11 and 141. Furthermore, in the configuration of the control system 141', components having basically the same functions as those of the control system 141 are denoted by the same numerals with a "'" added thereto.

An SPI communication control unit (SPI Master) 181' and a light emission synchronization signal control unit (Timer) 182' are provided in an MCU 161' in the control system 141' of the backlight LED-mounted substrate 131 of the present disclosure illustrated in the lower part of Fig. 14. The SPI communication control unit 181' and the light emission synchronization signal control unit 182' have configurations corresponding to the SPI communication control units (SPI Masters) 41 and 181 and the light emission synchronization signal control units (Timers) 42 and 182, respectively, and have the same basic functions.

That is, in the control system 141' of the backlight LED-mounted substrate 131 of the present disclosure, the light emission synchronization signal EMIT is superimposed on the PWM clock signal PWMCLK output from the light emission synchronization signal control unit (Timer) 182' of the MCU 161', and thus, the PWM clock signal PWMCLK and the light emission synchronization signal EMIT are transmitted to the LED driver 171'-1 through one wiring line.

The LED driver 171'-1 receives the data signal DATA #1, based on the clock signal CLK #1 from the SPI communication control unit (SPI Master) 181'. The LED driver 171'-1 receives a PWM clock signal EMIT/PWMCLK #1 on which the light emission synchronization signal from the synchronization signal control unit (Timer) 182 is superimposed, and performs PWM control, based on the PWM clock signal PWMCLK #1, to cause the LEDs 172 to emit light at a brightness in accordance with the data signal DATA #1, at a timing of the light emission synchronization signal EMIT #1.

Furthermore, LED driver 171'-1 transmits, to the LED driver 171'-2 in the subsequent stage, the data signal DATA #1, the clock signal CLK #1, and the PWM clock signal EMIT/PWMCLK #1 on which the light emission synchronization signal is superimposed, as the data signal DATA #2, the clock signal CLK #2, and a PWM clock signal EMIT/PWMCLK #2 on which the light emission synchronization signal is superimposed.

Similarly, the LED driver 171'-2 receives the data signal DATA #2, based on the clock signal CLK #2 from the LED driver 171'-1. The LED driver 171'-2 receives the PWM clock signal EMIT/PWMCLK #2 on which the light emission synchronization signal from the LED driver 171'-1 is superimposed, and performs PWM control, based on the PWM clock signal PWMCLK #2, to cause the LEDs 172 to emit light at a brightness in accordance with the data signal DATA #2, at a timing of the superimposed light emission synchronization signal EMIT #2.

Furthermore, the LED driver 171'-2 transmits, to the LED driver 171'-3 in the subsequent stage, the data signal DATA #2, the clock signal CLK #2, and the PWM clock signal EMIT/PWMCLK #2 on which the light emission synchronization signal is superimposed, as the data signal DATA #3, the clock signal CLK #3, and a PMW clock signal EMIT/PWMCLK #3 on which the light emission synchronization signal is superimposed.

Thereafter, the data signal DATA #N, the clock signal CLK #N, and a PWM clock signal EMIT/PWMCLK #N on which the light emission synchronization signal is superimposed, are transmitted to the LED driver 171'-N, and a similar process is executed, to control the light emission of the backlight LED-mounted substrate 131.

Thus, the data signal DATA, the clock signal CLK, and the PWM clock signal EMIT/PWMCLK on which the light emission synchronization signal is superimposed, which are transmitted from the MCU 161', are transmitted by a relay method in each of the LED drivers 171'-1 to 171'-N, and are transmitted to the LED driver 171'-N in the last stage.

At this time, the PWM clock signal PWMCLK is transmitted in a state in which the light emission synchronization signal EMIT is superimposed thereon, and thus, the signals can be transmitted through an integrated wiring line.

Accordingly, each of the LED drivers 171' includes six terminals 171'a to 171'f for transmitting and receiving the data signal DATA, the clock signal CLK, and the PWM clock signal PWMCLK on which the light emission synchronization signal EMIT is superimposed, which are each transmitted from components in the preceding stage, via the data signal wiring line, the SPI communication clock wiring line, and the PWM clock signal wiring line. That is, also in the LED driver 171' of the present disclosure illustrated in the lower part of Fig. 14, similarly to the LED driver 171, it is possible to employ a configuration in which two terminals for transmitting and receiving only the light emission synchronization signal EMIT are omitted from the terminals 32a to 32h in the LED driver 32.

As a result, also in the LED driver 171', similarly to the LED driver 171, two terminals, that is, a terminal for receiving the light emission synchronization signal EMIT and a terminal for transmitting the light emission synchronization signal EMIT are omitted. Therefore, the manufacturing cost can be reduced, and the physical size can be reduced by omitting the two terminals, so that it is possible to reduce the size of the device.

### Configuration Example of Superimposing Light Emission Synchronization Signal on PWM Clock Signal

Next, a configuration example of superimposing the light emission synchronization signal on the PWM clock signal will be described with reference to Fig. 15.

Fig. 14 illustrates a detailed configuration of the MCU 161' used for superimposing the light emission synchronization signal on the PWM clock signal, and an example of a configuration of a multiplexer 301 used for superimposing the light emission synchronization signal EMIT on the data signal.

The MCU 161' includes the SPI communication control unit (SPI Master) 181', the light emission synchronization signal control unit (Timer) 182' including a PWM clock signal output terminal (Timer CLK out) 182'a and a synchronization signal output terminal (Timer Pulse out) 182'b, and a switching signal output terminal (General Purpose Input/Output (GPIO)) 183'.

The SPI communication control unit (SPI Master) 181' includes terminals 181'a and 181'b. However, these are respectively similar to the SPI communication control unit (SPI Master) 181 and the terminals 181a and 181b. However, the terminals 181'a and 181'b output the clock signal CLK and the data signal DATA to the LED driver 171' in the subsequent stage, via wiring lines 211' and 212', respectively.

The PWM clock signal output terminal 182'a outputs, to a terminal 301b of the multiplexer (MUX) 301 via a wiring line 213', the PWM clock signal PWMCLK for controlling the brightness in the LED driver 171' by pulse width modulation (PWM).

The light emission synchronization signal terminal 182b' outputs, to a terminal 301c of the multiplexer (MUX) 301 via a wiring line 214' at predetermined time intervals, the light emission synchronization signal EMIT formed of a pulse waveform for controlling a light emission timing in each of the LED drivers 171'.

The switching signal output terminal 183' outputs, via a wiring line 215', a control signal for controlling a switch 301a of the multiplexer 301 and controls the switch 301a of the multiplexer 301 to switch and connect the switch 301a to any one of the terminals 301b and 301c.

The multiplexer 301 outputs a signal supplied via the terminals 301b and 301c to which the switch 301a controlled by the switching signal output terminal 183' is connected, to the LED driver 171 in the subsequent stage via a wiring line 311. That is, the multiplexer 301 outputs the PWM clock signal PWMCLK to the subsequent stage, when the switch 301a is connected to the terminal 301b, and outputs the light emission synchronization signal EMIT to the subsequent stage, when the switch 301a is connected to the terminal 301c.

The multiplexer 301 is controlled by the MCU 161', and thus, it can be said that the multiplexer 103 substantially functions as a part of the MCU 161'.

### Switching Control of Switches in Multiplexer of Fig. 15

Next, a signal waveform output from the MCU 161' and the switching control of the switch 301a of the multiplexer 301 will be described with reference to Figs. 16 to 18.

The third row from the top row in the waveform diagram in Fig. 16 illustrates waveforms of the PWM clock signal PWMCLK output via the terminal 182'a and the wiring line 213', the light emission synchronization signal EMIT output from the light emission synchronization signal output terminal (Timer Pulse out) 182'b and the wiring line 214', and an output signal from the switch 301a of the multiplexer 301 and the wiring line 311.

In the fourth row and the fifth row of Fig. 16, waveforms of a charging voltage Vcondenser of a capacitor 331 of the LED driver 171', which will be described later with reference to Fig. 19, and a light emission synchronization signal EMIT' from a comparator 333 to be input to a light emission control unit 334 are illustrated. Note that, in the waveforms in the third row of Fig. 16, the waveform of the charging voltage Vcondenser in the fourth row is represented in an overlapping manner by a dotted line for comparison.

In each waveform, the waveform of the output signal from the multiplexer 301 is changed by the switching control of the switch 301a of the multiplexer 301 in each period. A first period P11 and a second period P12 are set for the switching control of the switch 301a in the multiplexer 301.

In the first period P11, the switch 301a is connected to the terminal 301b, so that the multiplexer 301 outputs the PWM clock signal PWMCLK. In the second period P12, the switch 301a is connected to the terminal 301c, so that the multiplexer 301 outputs the light emission synchronization signal EMIT.

More specifically, in the first period P11, which is a period from a time t130 to a time t131 in Fig. 16, the switching signal output terminal 183' outputs, via the wiring line 215', a control signal for controlling the switch 301a of the multiplexer 301, and controls, as illustrated in Fig. 17, the switch 301a of the multiplexer 301 to connect the switch 301a to the terminal 301b. Thus, the PWM clock signal PWMCLK is output from the multiplexer 301 to the LED driver 171' in the subsequent stage.

When the pulse waveform of the light emission synchronization signal EMIT rises at the time t131, the switching signal output terminal 183' outputs, via the wiring line 215', a control signal for controlling the switch 301a of the multiplexer 301, at a time t141 after a predetermined period (after one cycle of the PWM clock signal PWMCLK in Fig. 17), and as illustrated in Fig. 18, controls the switch 301a of the multiplexer 301 to connect the switch 301a to the terminal 301c. Accordingly, the processing proceeds to the second period P12, and the multiplexer 301 outputs the light emission synchronization signal EMIT.

As illustrated in Fig. 16, when the light emission synchronization signal EMIT drops at a time t132 after a predetermined period T11 has elapsed from when the light emission synchronization signal EMIT rises, the light emission synchronization signal EMIT output from the multiplexer 301 also drops.

At a time t133 when a predetermined period T13 has elapsed after the light emission synchronization signal EMIT drops, the switching signal output terminal 183' outputs, via the wiring line 215', a control signal for controlling the switch 301a of the multiplexer 301, and as illustrated in Fig. 17, controls the switch 301a of the multiplexer 301 to connect the switch 301a to the terminal 301b. Thus, the processing returns to the first period P11, and the multiplexer 301 outputs the PWM clock signal PWMCLK.

That is, as illustrated in the uppermost row of Fig. 16, the terminal 182a that outputs the PWM clock signal PWMCLK does not change in the first period P11 and the second period P12, and continues to output the PWM clock signal PWMCLK.

As illustrated in the second row from the top in Fig. 16, the terminal 182b that outputs the light emission synchronization signal EMIT generates the light emission synchronization signal EMIT with a pulse shape having a length of the predetermined period T11 at a predetermined cycle.

As illustrated in Fig. 17, at the time t131, in a period before the light emission synchronization signal EMIT rises, which is the first period P11, the switching signal output terminal 183' switches the switch 301a of the multiplexer 301 to connect the switch 301a to the terminal 301b.

When the light emission synchronization signal EMIT rises at the time t131, the switching signal output terminal 183' switches the switch 301a of the multiplexer 301 to connect the switch 301a to the terminal 301c, as illustrated in Fig. 18, after a predetermined period (one cycle in Fig. 16) of the PWM clock signal PWMCLK has elapsed.

Accordingly, the processing proceeds to the second period P12, and the multiplexer 301 outputs the light emission synchronization signal EMIT from a timing of the time t141, which is delayed by the predetermined period from the time when the light emission synchronization signal EMIT rises.

When the predetermined period T11 has elapsed from the time when the light emission synchronization signal EMIT rises, and then, the light emission synchronization signal EMIT drops, as indicated at the time t132, the terminal 182'b stops outputting the light emission synchronization signal EMIT.

After the predetermined period T13 (three cycles of the PWM clock signal PWMCLK in Fig. 16) has elapsed at the time t132 from the time when the light emission synchronization signal EMIT drops, the switching signal output terminal 183' switches the switch 301a of the multiplexer 301 to connect the switch 301a to the terminal 301b at the time t133, and the multiplexer 301 outputs the PWM clock signal PWMCLK again.

As a result, the LED driver 171' in the subsequent stage can recognize, as a timing when the light emission synchronization signal EMIT rises, the time t131, which is a timing earlier by the predetermined period T11 serving as the pulse width of the light emission synchronization signal EMIT, than a timing when a pulse signal drops, which is output longer by a predetermined period T12 than the PWM clock signal PWMCLK.

### Configuration Example of LED Driver in Fig. 14

Next, a configuration example of the LED driver 171' will be described with reference to Fig. 19.

The LED driver 171' includes a resistor 330, the capacitor 331, a power supply 332, the comparator 333, and the light emission control unit 334.

The capacitor 331 is connected, via the resistor 330, to the wiring line 311 by which the PWM clock signal PWMCLK on which the light emission synchronization signal EMIT is superimposed is supplied and a non-inverting input terminal of the comparator 333. Therefore, the capacitor 331 is charged, based on the PWM clock signal PWMCLK on which the light emission synchronization signal EMIT is superimposed, and the charging voltage Vcondenser of the capacitor 331 is output to the non-inverting input terminal of the comparator 333.

The power supply (Vcomp) 332 is connected to an inverting input terminal of the comparator 333, and outputs a predetermined power supply voltage Vcomp to the inverting input terminal.

The comparator 333 compares the charging voltage Vcondenser of the capacitor 331 input to the non-inverting input terminal with the predetermined power supply voltage Vcomp input by the power supply 332 to the inverting input terminal, and outputs, to the light emission control unit 334, a signal EMIT' indicating that the light emission synchronization signal EMIT is detected, when the charging voltage Vcondenser of the capacitor 331 is higher than the predetermined power supply voltage Vcomp.

When a signal output from the multiplexer 301 is the PWM clock signal PWMCLK, the capacitor 331 is not sufficiently charged, because the Hi signal and the Low signal are repeated in a fast cycle. That is, as indicated at the time t130 to the time t141 in the fourth row in Fig. 16, the charging voltage Vcondenser does not exceed the predetermined power supply voltage Vcomp. On the other hand, in the second period P12, when the signal output from the multiplexer 301 is the light emission synchronization signal EMIT, the Hi signal is continuously output only during the predetermined period T12 having a length necessary and sufficient for charging the capacitor 331, and thus, the capacitor 331 is charged during this period.

On the other hand, the voltage Vcomp of the power supply 332 is set to the voltage Vcondenser (strictly speaking, to a voltage slightly smaller than the voltage Vcondenser) at which the capacitor 331 is charged, when the Hi signal from the multiplexer 301 is supplied only during the predetermined period T12.

Therefore, in the second period P12, the Hi signal is continuously output only for the predetermined period T12, and thus, the charging voltage Vcondenser of the capacitor 331 becomes larger than the voltage Vcomp, so that the comparator 333 outputs, to the light emission control unit 334, the signal EMIT' indicating that the light emission synchronization signal EMIT is detected.

More specifically, as illustrated in the fourth row in Fig. 16, the light emission synchronization signal EMIT is output from the multiplexer 301 at the time t141, and the Hi signal is continuously output only during the predetermined period T12, so that the capacitor 331 is continuously charged. Accordingly, at a time t151, the charging voltage Vcondenser exceeds the predetermined power supply voltage Vcomp.

At this time, as illustrated in the fifth row in Fig. 16, the comparator 333 outputs the EMIT' signal (Hi signal) indicating that the light emission synchronization signal EMIT is detected.

Thereafter, when the light emission synchronization signal EMIT drops, the light emission synchronization signal EMIT output from the multiplexer 301 also drops. Furthermore, when the light emission synchronization signal EMIT drops, the charging voltage Vcondenser is smaller than the predetermined power supply voltage Vcomp. Therefore, as illustrated in the fifth row in Fig. 16, at the time t132, the comparator 333 stops outputting the EMIT' signal indicating that the light emission synchronization signal EMIT is detected, and thus, the EMIT' signal also drops.

When the comparator 333 supplies the EMIT' signal indicating that the light emission synchronization signal EMIT is detected, the light emission control unit 334 regards a timing earlier by the above-mentioned predetermined period T11 than the timing at which the EMIT' signal drops, as the timing at which the light emission synchronization signal EMIT rises, and controls the light emission timing.

That is, the light emission control unit 334 controls the light emission timing of the LEDs 172' in consideration of a delay time relating to the transmission, based on the stage of the LED driver 171' counting from the MCU 161' in the daisy chain connection, by using as reference a timing of the time t131 that is earlier by the predetermined period T11 than the timing at which the light emission synchronization signal EMIT is detected (drops).

The light emission control unit 334 receives and stores, in synchronization with the clock signal CLK, the data signal DATA for controlling the light emission of the LEDs 172', at the next timing such a timing of the PWM control data for controlling the light emission of the LEDs 172', the current setting, and the delay time.

That is, when the light emission control unit 334 causes the LEDs 172' to emit light from a timing earlier by the predetermined period T11 than the timing at which the light emission synchronization signal EIMT is received, the light emission control unit 334 utilizes the PWM clock signal PWMCLK to cause the LEDs 172' to emit light, based on the data signal DATA received at the immediately preceding timing.

The light emission control unit 334 causes the LEDs 172' to emit light, based on the data signal DATA received at the immediately preceding timing, and simultaneously, receives the data signal DATA for causing the LEDs 172' to emit light at the next timing.

According to the above-described configuration, it is possible to employ a configuration in which the LED driver 171' can receive the light emission synchronization signal EMIT and the PWM clock signal PWMCLK in a time-division multiplexed state and execute timing control of the light emission of the LEDs 172 and PWM control, and thus, the two terminals for transmitting and receiving only the PWM clock signal PWMCLK can be omitted.

As a result, by omitting the two terminals that transmit and receive only the PWM clock signal PWMCLK, it is possible to reduce the cost relating to the two terminals, and by omitting the physical space of the two terminals, it is possible to realize a reduction in the size of the device.

Note that in the present specification, the term "system" refers to a set of a plurality of constituent components (such as devices and modules (parts)), regardless of whether all the constituent components are present in the same housing. Therefore, the system refers to both a plurality of devices housed in separate housings and connected via a network, and one device in which a plurality of modules are housed in one housing.

Furthermore, embodiments of the present disclosure are not limited to the above-described embodiments, and various modifications can be made without departing from the scope of the present disclosure.

For example, the present disclosure can adopt a configuration of cloud computing in which a single function is shared and processed jointly by a plurality of devices via a network.

Further, each step described in the above-described flowchart can be performed by one device or can be shared and executed by a plurality of devices.

Further, when a single step includes multiple processes, the multiple processes included in that single step can be executed by a single device, or can be shared and executed by multiple devices.

The present disclosure may also be configured as follows.
<1> A display apparatus including
   a light emission synchronization signal output unit configured to output a light emission synchronization signal that is supplied to a plurality of light-emitting diode (LED) drivers controlling light emission of LEDs and is used to synchronize light emission of the plurality of LED drivers,
   a light emission control signal output unit configured to output a light emission control signal used by each of the plurality of LED drivers to control light emission of the LEDs, and
   a superimposing unit configured to superimpose the light emission synchronization signal and the light emission control signal.
<2> The display apparatus according to <1>, in which the light emission control signal is a data signal used to control light emission of the LEDs.
<3> The display apparatus according to <2>, in which the superimposing unit multiplexes the data signal and the light emission synchronization signal to superimpose and output the light emission synchronization signal and the data signal.
<4> The display apparatus according <3>, further including a data clock signal output unit configured to output a data clock signal being a clock signal used for communicating the data signal to the plurality of LED drivers, in which
   when the superimposing unit outputs the data signal, the data clock signal output unit outputs the data clock signal, and
   when the superimposing unit outputs the light emission synchronization signal, the data clock signal output unit stops outputting the data clock signal.
<5> The display apparatus according to <4>, further including a multiplexer configured to multiplex and output the data clock signal output by the data clock signal output unit and a ground potential, in which
   when the superimposing unit outputs the data signal, the multiplexer outputs the data clock signal to the plurality of LED drivers, and
   when the superimposing unit outputs the light emission synchronization signal, the multiplexer outputs the ground potential to the plurality of LED drivers.
<6> The display apparatus according to <5>, in which, when the superimposing unit outputs the data signal, the data clock signal output unit starts outputting the data clock signal within a predetermined time after the data signal drops from a Hi signal to a Low signal, and
   after the multiplexer outputs the ground potential for a predetermined time or longer, the superimposing unit starts outputting the light emission synchronization signal.
<7> The display apparatus according to <6>, in which, when the multiplexer outputs the ground potential for the predetermined time or longer, the superimposing unit stops outputting both the data signal and the light emission synchronization signal.
<8> The display apparatus according to <7>, in which the LED driver includes
   a demultiplexer configured to separate the light emission synchronization signal and the data signal from an output of the superimposing unit in which the light emission synchronization signal and the data signal are multiplexed,
   a light emission control unit configured to control light emission of the LEDs, based on the light emission synchronization signal and the data signal separated by the demultiplexer, and
   a determination unit configured to control the demultiplexer, based on an output from the multiplexer, in which
   the determination unit
   controls the demultiplexer to cause the demultiplexer to output the output from the superimposing unit to the light emission control unit as the light emission synchronization signal, when a state in which the output from the multiplexer drops to a Low signal continues for the predetermined time or more, and
   controls the demultiplexer to cause the demultiplexer to output the output from the superimposing unit to the light emission control unit as the data signal, when the output from the multiplexer rises to a Hi signal within the predetermined time from the state in which the output from the multiplexer drops to the Low signal.
<9> The display apparatus according to <8>, in which the plurality of LED drivers are connected in a daisy chain to a subsequent stage of the superimposing unit and the multiplexer, and sequentially output the output from the superimposing unit and the output from the multiplexer to the LED driver in a subsequent stage by a relay method.
<10> The display apparatus according to <9>, in which the light emission control unit controls a light emission timing of the LEDs in consideration of a delay time relating to transmission of the light emission synchronization signal between the plurality of LED drivers, based on a number of the plurality of LED drivers connected in the daisy chain at a subsequent stage of the light emission control unit.
<11> The display apparatus according to <1>, in which the light emission control signal is a pulse width modulation (PWM) clock signal controlling light emission of the LEDs by PWM.
<12> The display apparatus according to <11>, in which the superimposing unit multiplexes the PWM clock signal and the light emission synchronization signal to superimpose the light emission synchronization signal on the PWM clock signal.
<13> The display apparatus according to <12>, in which the superimposing unit outputs the light emission synchronization signal with a delay of a first time, when the light emission synchronization signal rises to a Hi signal, and outputs the PWM clock signal with a delay of a second time different from the first time, when the light emission synchronization signal drops to a Low signal.
<14> The display apparatus according to <13>, in which the LED driver includes
   a capacitor configured to charge the output of the superimposing unit in which the light emission synchronization signal and the PWM clock signal are multiplexed,
   a comparator using a charging voltage of the capacitor as a non-inverted input and a power supply corresponding to a charging voltage when the capacitor is charged for a predetermined time as an inverted input, and
   a light emission control unit configured to control light emission of the LEDs, based on the light emission synchronization signal and the PWM clock signal, and
   the light emission control unit controls a timing of light emission of the LEDs, based on an output from the comparator, with reference to a timing at which the output of the superimposing unit is regarded as the light emission synchronization signal, and controls the light emission of the LEDs, based on the PWM clock signal being the output of the superimposing unit.
<15> The display apparatus according to <14>, in which the plurality of LED drivers are connected in a daisy chain to a subsequent stage of the superimposing unit, and sequentially output the output from the superimposing unit to the LED driver in a subsequent stage by a relay method.
<16> The display apparatus according to <15>, in which the light emission control unit controls a light emission timing of the LEDs in consideration of a delay time relating to transmission of the light emission synchronization signal between the plurality of LED drivers, based on a number of the plurality of LED drivers connected in the daisy chain at a subsequent stage of the light emission control unit.
<17> A method of operating a display apparatus including
   outputting a light emission synchronization signal that is supplied to a plurality of light-emitting diode (LED) drivers controlling light emission of LEDs and is used to synchronize light emission of the plurality of LED drivers,
   outputting a light emission control signal used by the plurality of LED drivers to control light emission of the LEDs, and
   superimposing the light emission synchronization signal and the light emission control signal.
<18> A backlight including a light emission synchronization signal output unit configured to output a light emission synchronization signal that is supplied to a plurality of light-emitting diode (LED) drivers controlling light emission of LEDs and is used to synchronize light emission of the plurality of LED drivers,
   a light emission control signal output unit configured to output a light emission control signal used by each of the plurality of LED drivers to control light emission of the LEDs, and
   a superimposing unit configured to superimpose the light emission synchronization signal and the light emission control signal.

### Reference Signs List

101 Display apparatus, 121 Liquid crystal panel, 122 Backlight panel, 131, 131-1 to 131-12 Backlight light-emitting diode (LED)-mounted substrate, 141, 141' Control system, 151, 151-1 to 151-M LED panel, 161, 161' MCU, 171 LED driver, 172, 172-1 to 172-6, 172' LED, 181, 181' SPI communication control unit (SPI Master), 181a, 181b 181'a 181'b Terminal, 182, 182' Synchronization signal control unit (Timer), 182a, 182'a PWM clock signal output terminal (Timer CLK out), 182b, 182'b Synchronization signal output terminal (Timer Pulse out), 183, 183' Switching signal output terminal (General Purpose Input/Output (GPIO)), 201 Multiplexer (MUX), 201a Switch, 201b, 201c Terminal, 202 Multiplexer, 202a Switch, 202b, 202c Terminal, 231 Signal determination unit, 232 Demultiplexer (DEMUX), 232a Switch, 232b, 232c Terminal, 233 Light emission control unit, 301 Multiplexer (MUX), 301a Switch, 301b, 301c Terminal, 330 Resistor, 331 Capacitor, 332 Power supply, 333 Comparator, 334 Light emission control unit

## Claims

1. A display apparatus comprising:
a light emission synchronization signal output unit configured to output a light emission synchronization signal that is supplied to a plurality of light-emitting diode (LED) drivers configured to control light emission of LEDs and is used to synchronize light emission of the plurality of LED drivers;
a light emission control signal output unit configured to output a light emission control signal used by each of the plurality of LED drivers to control light emission of the LEDs; and
a superimposing unit configured to superimpose the light emission synchronization signal and the light emission control signal.

2. The display apparatus according to claim 1, wherein
the light emission control signal is a data signal used to control light emission of the LEDs.

3. The display apparatus according to claim 2, wherein
the superimposing unit multiplexes the data signal and the light emission synchronization signal to superimpose and output the light emission synchronization signal and the data signal.

4. The display apparatus according to claim 3, further comprising:
a data clock signal output unit configured to output a data clock signal being a clock signal used for communicating the data signal to the plurality of LED drivers, wherein
when the superimposing unit outputs the data signal, the data clock signal output unit outputs the data clock signal, and
when the superimposing unit outputs the light emission synchronization signal, the data clock signal output unit stops outputting the data clock signal.

5. The display apparatus according to claim 4, further comprising:
a multiplexer configured to multiplex and output the data clock signal output by the data clock signal output unit and a ground potential, wherein
when the superimposing unit outputs the data signal, the multiplexer outputs the data clock signal to the plurality of LED drivers, and
when the superimposing unit outputs the light emission synchronization signal, the multiplexer outputs the ground potential to the plurality of LED drivers.

6. The display apparatus according to claim 5, wherein,
when the superimposing unit outputs the data signal, the data clock signal output unit starts outputting the data clock signal within a predetermined time after the data signal drops from a Hi signal to a Low signal, and
after the multiplexer outputs the ground potential for a predetermined time or longer, the superimposing unit starts outputting the light emission synchronization signal.

7. The display apparatus according to claim 6, wherein,
when the multiplexer outputs the ground potential for the predetermined time or longer, the superimposing unit stops outputting both the data signal and the light emission synchronization signal.

8. The display apparatus according to claim 7, wherein the LED driver comprises:
a demultiplexer configured to separate the light emission synchronization signal and the data signal from an output of the superimposing unit in which the light emission synchronization signal and the data signal are multiplexed;
a light emission control unit configured to control light emission of the LEDs, based on the light emission synchronization signal and the data signal separated by the demultiplexer; and
a determination unit configured to control the demultiplexer, based on an output from the multiplexer, wherein
the determination unit
controls the demultiplexer to cause the demultiplexer to output the output from the superimposing unit to the light emission control unit as the light emission synchronization signal, when a state in which the output from the multiplexer drops to a Low signal continues for the predetermined time or more, and
controls the demultiplexer to cause the demultiplexer to output the output from the superimposing unit to the light emission control unit as the data signal, when the output from the multiplexer rises to a Hi signal within the predetermined time from the state in which the output from the multiplexer drops to the Low signal.

9. The display apparatus according to claim 8, wherein
the plurality of LED drivers are connected in a daisy chain to a subsequent stage of the superimposing unit and the multiplexer, and sequentially output the output from the superimposing unit and the output from the multiplexer to the LED driver in a subsequent stage by a relay method.

10. The display apparatus according to claim 9, wherein
the light emission control unit controls a light emission timing of the LEDs in consideration of a delay time relating to transmission of the light emission synchronization signal between the plurality of LED drivers, based on a number of the plurality of LED drivers connected in the daisy chain at a subsequent stage of the light emission control unit.

11. The display apparatus according to claim 1, wherein
the light emission control signal is a pulse width modulation (PWM) clock signal configured to control light emission of the LEDs by PWM.

12. The display apparatus according to claim 11, wherein
the superimposing unit multiplexes the PWM clock signal and the light emission synchronization signal to superimpose the light emission synchronization signal on the PWM clock signal.

13. The display apparatus according to claim 12, wherein
the superimposing unit outputs the light emission synchronization signal with a delay of a first time, when the light emission synchronization signal rises to a Hi signal, and outputs the PWM clock signal with a delay of a second time different from the first time, when the light emission synchronization signal drops to a Low signal.

14. The display apparatus according to claim 13, wherein the LED driver comprises:
a capacitor configured to charge the output of the superimposing unit in which the light emission synchronization signal and the PWM clock signal are multiplexed;
a comparator using a charging voltage of the capacitor as a non-inverted input and a power supply corresponding to a charging voltage when the capacitor is charged for a predetermined time as an inverted input; and
a light emission control unit configured to control light emission of the LEDs, based on the light emission synchronization signal and the PWM clock signal, and
the light emission control unit controls a timing of light emission of the LEDs, based on an output from the comparator, with reference to a timing at which the output of the superimposing unit is regarded as the light emission synchronization signal, and controls the light emission of the LEDs, based on the PWM clock signal being the output of the superimposing unit.

15. The display apparatus according to claim 14, wherein
the plurality of LED drivers are connected in a daisy chain to a subsequent stage of the superimposing unit, and sequentially output the output from the superimposing unit to the LED driver in a subsequent stage by a relay method.

16. The display apparatus according to claim 15, wherein
the light emission control unit controls a light emission timing of the LEDs in consideration of a delay time relating to transmission of the light emission synchronization signal between the plurality of LED drivers, based on a number of the plurality of LED drivers connected in the daisy chain at a subsequent stage of the light emission control unit.

17. A method of operating a display apparatus, the method comprising:
outputting a light emission synchronization signal that is supplied to a plurality of light-emitting diode (LED) drivers configured to control light emission of LEDs and is used to synchronize light emission of the plurality of LED drivers;
outputting a light emission control signal used by the LED drivers to control light emission of the LEDs; and
superimposing the light emission synchronization signal and the light emission control signal.

18. A backlight comprising:
a light emission synchronization signal output unit configured to output a light emission synchronization signal that is supplied to a plurality of light-emitting diode (LED) drivers configured to control light emission of LEDs and is used to synchronize light emission of the plurality of LED drivers;
a light emission control signal output unit configured to output a light emission control signal used by each of the plurality of LED drivers to control light emission of the LEDs; and
a superimposing unit configured to superimpose the light emission synchronization signal and the light emission control signal.
